# EUROPEAN PATENT SPECIFICATION

(11) **EP 2 873 870 B1**
(45) Date of publication and mention of the grant of the patent: **15.06.2016**
(21) Application number: 14191909.2
(22) Date of filing: 05.11.2014
(51) Int. Cl.: F15B 13/043, F15B 13/042, F04B 1/04, F03C 1/34, F16K 11/00, F03D 9/00

(54) **Spool valve assembly, hydraulic machine and power generating apparatus**
Schieberventilanordnung, hydraulische Maschine der Leistungserzeugungsvorrichtung
Ensemble distributeur à tiroir, machine hydraulique et appareil de génération de puissance

(30) Priority: 07.11.2013 JP 2013231560
(43) Date of publication of application: 20.05.2015
(73) Proprietor: Mitsubishi Heavy Industries, Ltd., Tokyo 108-8215 (JP); Toyooki Kogyo Co., Ltd., Okazaki-shi, Aichi 444-3592 (JP)
(72) Inventor: Shimizu, Masayuki, Tokyo, 108-8215 (JP); Uchida, Michiya, Tokyo, 108-8215 (JP); Hitomi, Haruki, Tokyo, 108-8215 (JP); Fujisaka, Masahiro, Okasaki-shi, Aichi 444-3592 (JP); Watanabe, Noritaka, Okasaki-shi, Aichi 444-3592 (JP)
(74) Representative: Intès, Didier Gérard André

(56) References cited:
- EP-A2- 0 703 369
- WO-A1-2011/079916
- WO-A1-2013/005258
- GB-A- 1 153 395
- GB-A- 1 270 958
- US-A- 3 234 857
- US-A- 3 329 159

## Description

### TECHNICAL FIELD

The present disclosure relates to a spool valve assembly for a hydraulic machine.

### BACKGROUND

Conventionally, in a hydraulic machine including a hydraulic pump, a hydraulic motor and the like, a spool valve may be used to control hydraulic pressure.

Patent Document 1 discloses a spool valve being used as a control valve for adjusting the discharge rate of a vane pump. In this spool valve, a pressure-receiving surface on one end side of the spool is spring-biased. A magnitude relationship of a sum of the biasing force of the spring acting on the pressure-receiving surface on one end side and the force of hydraulic pressure with the force of hydraulic pressure acting on the pressure-receiving surface of the other end side of the spool is switched in accordance with the rotation speed of the vane pump. As a result, the spool is caused to move in the axial direction.

### Citation List

### Patent Literature

Patent Document 1: JP2010-168899A1

### SUMMARY

In Patent Document 1 described above, a valve high-pressure chamber on one end side of the spool is connected to a discharge port of the vane pump via a variable damper orifice. A valve medium-pressure chamber on the other end side of the spool is connected to the discharge port of the vane pump via a metering orifice. Thus, hydraulic pressure acting on the pressure-receiving surface of the one end side of the spool (pressure-receiving surface on a high-pressure chamber side) and hydraulic pressure acting on the pressure-receiving surface of the other end side of the spool (pressure-receiving surface of a medium-pressure chamber side) are controlled to be different from each other by using pressure loss caused by each orifice. A relatively complex hydraulic circuit is used in order to operate the
spool.

US3329159 discloses a spool valve assembly according to the preamble of claim 1.

An object of some embodiments of the present invention is to provide a spool valve assembly which has a spool valve that can be switched by a simplified configuration in which at least a part of hydraulic pressure acting on each pressure-receiving surface of a spool are standardized.
(1) A spool valve assembly according to the present invention is for switching a state of a hydraulic machine which includes a hydraulic chamber, a high pressure oil line, and a low pressure oil line, between a first state where the hydraulic chamber is in communication with the high pressure oil line and a second state where the hydraulic chamber is in communication with the low pressure oil line. The spool valve assembly includes a first spool valve which has a first chamber, a second chamber, and a first spool including a first pressure-receiving surface formed so as to receive hydraulic pressure of the first chamber and a second pressure-receiving surface formed so as to receive hydraulic pressure of the second chamber, the second pressure-receiving surface having an area smaller than that of the first pressure-receiving surface. Also, the first spool valve is configured to switch a communication state of the hydraulic chamber between the first state and the second state, by switching the hydraulic pressure of the first chamber between pressure in the high pressure oil line and first pressure which is lower than the pressure in the high pressure oil line while maintaining the hydraulic pressure in the second chamber at the pressure of the high pressure oil line, or by switching the hydraulic pressure of the second chamber between pressure in the low pressure oil line and second pressure which is higher than the low pressure oil line while maintaining the hydraulic pressure in the first chamber at the pressure of the low pressure oil line.
   According to the spool valve assembly described in (1), the second pressure-receiving surface of the first spool has an area smaller than that of the first pressure-receiving surface. Thus, when applying the pressure of the high pressure oil line to each of the first and second pressure-receiving surfaces, the first pressure-receiving surface receives larger force than the second pressure-receiving surface. On the other hand, when applying the first pressure, which is lower than the pressure of the high pressure oil line, to the first pressure-receiving surface in a state where the pressure of the high pressure oil line is applied to the second pressure-receiving surface, it is possible to make the force received by the first pressure-receiving surface smaller than the force received by the second pressure-receiving surface. Accordingly, by switching hydraulic pressure of the first chamber between the pressure of the high pressure oil line and the first pressure, which is lower than the pressure of the high pressure oil line, while maintaining hydraulic pressure of the second chamber at the pressure of the high pressure oil line, it is possible to switch a communication state of the hydraulic chamber between the first state, where the hydraulic chamber is in communication with the high pressure oil line, and the second state, where the hydraulic chamber is in communication with the low pressure oil line, by a simplified configuration in which one of hydraulic pressures which act on the first pressure-receiving surface and hydraulic pressure which acts on the second pressure-receiving surface are standardized. Also, it is possible to switch the communication state between the first state and the second state by a simplified configuration in which the pressure of the high pressure oil line inherently included in the hydraulic machine is used as a standardized hydraulic pressure for the first and second pressure-receiving surfaces.
   Further, according to the spool valve assembly described in the above (1), the second pressure-receiving surface of the first spool has an area smaller than that of the first pressure-receiving surface. Thus, when applying the pressure of the low pressure oil line to each of the first and second pressure-receiving surfaces, the first pressure-receiving surface receives larger force than the second pressure-receiving surface. On the other hand, when applying the second pressure, which is higher than the pressure of the low pressure oil line, to the second pressure-receiving surface in a state where the pressure of the low pressure oil line is applied to the first pressure-receiving surface, it is possible to make the force received by the second pressure-receiving surface larger than the force received by the first pressure-receiving surface by setting the second pressure at an appropriate pressure. Accordingly, by switching hydraulic pressure of the second chamber between the pressure of the low pressure oil line and the second pressure, which is higher than the pressure of the low pressure oil line, while maintaining hydraulic pressure of the first chamber at the pressure of the low pressure oil line, it is possible to switch a communication state of the hydraulic chamber between the first state and the second state by a simplified configuration in which one of hydraulic pressures which act on the second pressure-receiving surface and hydraulic pressure which acts on the first pressure-receiving surface are standardized. Also, it is possible to switch the communication state between the first state and the second state by a simplified configuration in which the pressure of the high pressure oil line inherently included in the hydraulic machine is used as a standardized pressure for the first and second pressure-receiving surfaces.
(2) In some embodiments, in the spool valve assembly described in the above (1), the first pressure is the pressure of the low pressure oil line, and the second pressure is the pressure of the high pressure oil line.
   According to the spool valve assembly described in (2), by a simplified configuration in which the pressures of the low pressure oil line and the high pressure oil line inherently included in the hydraulic machine are used as the pressures which act on the first and second pressure receiving surfaces, it is possible to switch the communication state of the hydraulic chamber between the first state, where the hydraulic chamber is in communication with the high pressure oil line, and the second state, where the hydraulic chamber is in communication with the low pressure oil line.
(3) In some embodiments, the spool valve assembly described in the above (1) or (2) further includes a second spool valve configured to switch the hydraulic pressure in the first chamber between the first pressure and the pressure of the high pressure oil line, or to switch the hydraulic pressure in the second chamber between the second pressure and the pressure of the low pressure oil line, and a solenoid valve configured to operate the second spool valve.
   In the spool valve assembly described in the above (3), in a case where a second spool valve for switching hydraulic pressure of the first chamber between the first pressure and the pressure of the high pressure oil line is included, it is possible to increase the flow rate of the oil available for the switching compared to a case where the hydraulic pressure of the first chamber is switched between the first pressure and the pressure of the high pressure oil line by a solenoid valve alone without using the second spool valve.
   Further, in the spool valve assembly described in the above (3), in a case where a second spool valve for switching hydraulic pressure of the second chamber between the second pressure and the pressure of the low pressure oil line is included, it is possible to increase the flow rate of the oil available for the switching compared to a case where the hydraulic pressure of the second chamber is switched between the second pressure and the pressure of the low pressure oil line by a solenoid valve alone without using the second spool valve.
(4) In some embodiments, in the spool valve assembly described in (3), the second spool valve includes a third chamber, a fourth chamber, and a second spool which includes a third pressure-receiving surface formed so as to receive hydraulic pressure of the third chamber and a fourth pressure-receiving surface formed so as to receive hydraulic pressure of the fourth chamber, the fourth pressure-receiving surface having an area smaller than that of the third pressure-receiving surface. Also, the second spool valve is configured to switch the hydraulic pressure of the first chamber between the first pressure and the pressure of the high pressure oil line or to switch the hydraulic pressure of the second chamber between the second pressure and the pressure of the low pressure oil line, by switching the hydraulic pressure of the third chamber between the pressure of the high pressure oil line and third pressure which is lower than the pressure of the high pressure oil line while maintaining the hydraulic pressure in the fourth chamber at the pressure of the high pressure oil line.
   According to the spool valve assembly described in the above (4), the fourth pressure-receiving surface of the second spool has an area smaller than that of the third pressure-receiving surface. Thus, when applying the pressure of the high pressure oil line to each of the third and fourth pressure-receiving surfaces, the third pressure-receiving surface receives larger force than the fourth pressure-receiving surface. On the other hand, when applying the third pressure, which is lower than the pressure of the high pressure oil line, to the third pressure-receiving surface in a state where the pressure of the high pressure oil line is applied to the fourth pressure-receiving surface, it is possible to make the force received by the third pressure-receiving surface smaller than the force received by the fourth pressure-receiving surface by setting the third pressure appropriately. Accordingly, by switching hydraulic pressure of the third chamber between the pressure of the high pressure oil line and the third pressure, which is lower than the pressure of the high pressure oil line, while maintaining hydraulic pressure of the fourth chamber at the pressure of the high pressure oil line, it is possible to switch hydraulic pressure of the first chamber or the second chamber of the first spool valve by a simplified configuration in which one of hydraulic pressures which act on the third pressure-receiving surface and hydraulic pressure which acts on the fourth pressure-receiving surface are standardized. Also, it is possible to switch the hydraulic pressure of the first chamber or the second chamber of the first spool valve by a simplified configuration in which the pressure of the high pressure oil line inherently included in the hydraulic machine is used as a standardized pressure for the third and fourth pressure-receiving surfaces.
(5) In some embodiments, in the spool valve assembly described in the above (3), the second spool valve includes a third chamber, a fourth chamber, and a second spool which includes a third pressure-receiving surface formed so as to receive hydraulic pressure of the third chamber and a fourth pressure-receiving surface formed so as to receive hydraulic pressure of the fourth chamber, the fourth pressure-receiving surface having an area smaller than that of the third pressure-receiving surface. Also, the second spool valve is configured to switch the hydraulic pressure of the first chamber between the first pressure and the pressure of the high pressure oil line or to switch the hydraulic pressure of the second chamber between the second pressure and the pressure of the low pressure oil line, by switching the hydraulic pressure of the fourth chamber between the pressure of the low pressure oil line and fourth pressure which is higher than the pressure of the low pressure oil line while maintaining the hydraulic pressure in the third chamber at the pressure of the low pressure oil line.
   According to the spool valve assembly described in the above (5), the fourth pressure-receiving surface of the second spool has an area smaller than that of the third pressure-receiving surface. Thus, when applying the pressure of the low pressure oil line to each of the third and fourth pressure-receiving surfaces, the third pressure-receiving surface receives larger force than the fourth pressure-receiving surface. On the other hand, when applying the fourth pressure, which is higher than the pressure of the low pressure oil line, to the fourth pressure-receiving surface in a state where the pressure of the low pressure oil line is applied to the third pressure-receiving surface, it is possible to make the force received by the fourth pressure-receiving surface larger than the force received by the third pressure-receiving surface by setting the fourth pressure at an appropriate pressure. Accordingly, by switching hydraulic pressure of the fourth chamber between the pressure of the low pressure oil line and the fourth pressure, which is higher than the pressure of the low pressure oil line, while maintaining hydraulic pressure of the third chamber at the pressure of the low pressure oil line, it is possible to switch hydraulic pressure of the first chamber or the second chamber of the first spool valve by a simplified configuration in which one of hydraulic pressures which act on the fourth pressure-receiving surface and hydraulic pressure which acts on the third pressure-receiving surface are standardized. Also, it is possible to switch the hydraulic pressure of the first chamber or the second chamber of the first spool valve by a simplified configuration in which the pressure of the low pressure oil line inherently included in the hydraulic machine is used as a standardized pressure for the third and fourth pressure-receiving surfaces.
(6) In some embodiments, in the spool valve assembly described in any one of the above (1) to (5), the first spool valve is configured to switch a communication state of the hydraulic chamber between the first state and the second state by switching the hydraulic pressure of the first chamber between the first pressure and the pressure of the high pressure oil line while maintaining the hydraulic pressure in the second chamber at the pressure of the high pressure oil line.
   According to the spool valve assembly described in the above (6), the second pressure-receiving surface of the first spool has an area smaller than that of the first pressure-receiving surface. Thus, when applying the pressure of the high pressure oil line to each of the first and second pressure-receiving surfaces, the first pressure-receiving surface receives larger force than the second pressure-receiving surface. On the other hand, when applying the first pressure, which is lower than the pressure of the high pressure oil line, to the first pressure-receiving surface in a state where the pressure of the high pressure oil line is applied to the second pressure-receiving surface, it is possible to make the force received by the first pressure-receiving surface smaller than the force received by the second pressure-receiving surface by setting the first pressure at an appropriate pressure.
   Accordingly, by switching hydraulic pressure of the first chamber between the pressure of the high pressure oil line and the first pressure, which is lower than the pressure of the high pressure oil line, while maintaining hydraulic pressure of the second chamber at the pressure of the high pressure oil line, it is possible to switch a communication state of the hydraulic chamber between the first state, where the hydraulic chamber is in communication with the high pressure oil line and the second state, where the hydraulic chamber is in communication with the low pressure oil line, by a simplified configuration in which one of hydraulic pressures which act on the first pressure-receiving surface and hydraulic pressure which acts on the second pressure-receiving surface are standardized. Also, it is possible to switch the communication state between the first state and the second state by a simplified configuration in which the pressure of the high pressure oil line inherently included in the hydraulic machine is used as a standardized pressure for the first and second pressure-receiving surfaces.
   In the spool valve assembly of the invention, the first spool valve includes a
   casing which accommodates the first spool, and the first spool includes a land portion and a groove portion which is disposed adjacent to the land portion, the first spool being configured to be movable in an axial direction of the first spool. Also, the casing includes a high pressure communication path configured to communicate with the high pressure oil line, a low pressure communication path configured
   to communicate with the low pressure oil line, and a hydraulic chamber communication path configured to communicate with the hydraulic chamber. Here, the first state is a state where the high pressure communication path is in communication with the hydraulic chamber communication path via the groove portion, while the second state is a state where the low pressure communication path is in communication with the hydraulic chamber communication path via the groove portion.
   According to the spool valve assembly described above, it is possible to easily switch the communication state between the first state, where the high pressure oil line is in communication with the hydraulic chamber, and the second state, where the low pressure oil line is in communication with the hydraulic chamber, via the high pressure communication path and low pressure communication path disposed in the casing.
(7) In some embodiments, in the spool valve assembly described in the above (1), the first spool valve includes a sleeve accommodated in the casing. Also, the first spool is configured such that the land portion is slidable on an inner circumferential face of the sleeve, and the sleeve includes a high pressure port configured to communicate with the high pressure oil line, a low pressure port configured to communicate with the low pressure oil line, and a hydraulic chamber port configured to communicate with the hydraulic chamber. Here, the first state is a state where the high pressure communication path is in communication with the land portion via the high pressure port and the hydraulic chamber communication path is in communication with the land portion via the hydraulic chamber port, while the second state is a state where the low pressure communication path is in communication with the land portion via the low pressure port and the hydraulic chamber communication path is in communication with the land portion via the hydraulic chamber port.
   According to the spool valve assembly described in the above (7), the sleeve includes a high pressure port, a low pressure port, and a hydraulic chamber port, and the first spool is configured to slide with respect to the inner circumferential face of this sleeve, the first spool including a land portion and a groove portion adjacent to the land portion. Thus, it is possible to easily switch the communication state between the first state, where the high pressure port is in communication with the hydraulic chamber port via the groove portion, and the second state, where the low pressure port is in communication with the hydraulic chamber port via the groove portion.
   In the spool valve assembly of the invention, the first spool valve includes a first drain chamber formed at one end side of the first spool and a second drain chamber formed at other end side of the first spool in the axial direction of the first spool. Also, the first drain chamber and the second drain chamber are configured to communicate with each other via a first drain flow path disposed in the casing and/or a second drain flow path disposed in the first spool.
   According to the spool valve assembly described above, since the first drain chamber and the second drain chamber are in communication with each other via a drain flow path disposed in the casing and/or a second drain flow path disposed in the first spool, the first and second drain chambers always have the same pressure regardless of the position of the first spool. Thus, there is no pressure difference caused between the first and second drain chambers, so that the movement and position of the first spool is not affected by such pressure difference. Therefore, it is possible to securely control the movement of the first spool by hydraulic pressures of the first and second chambers.
(8) In some embodiments, in the spool valve assembly described in any one of the above (1) to (7), the first spool valve includes an end wall on one end side of the casing in the axial direction of the first spool, and the first chamber or the second chamber is disposed on the end wall.
   According to the spool valve assembly described in the above (8), since the first chamber or the second chamber is disposed on an end wall which is disposed on the one end side of the casing in the axial direction of the first spool, it is possible to control hydraulic pressure that acts on the first or second pressure-receiving surface while improving the sealability of the first spool valve against oil.
   In the spool valve assembly of the invention, the first spool valve includes an end wall on one end side of the casing in the axial direction of the first spool, and the first drain chamber is formed between the end wall and the first spool. Also, the end wall includes a cut-out through which the first drain chamber is configured to communicate with the first drain flow path.
   According to the spool valve assembly described above, it is possible to bring the first drain chamber into communication with the drain path by a simplified configuration while improving sealability against oil of the first spool valve by an end wall disposed on the one end side of the casing in the axial direction of the first spool valve.
(9) In some embodiments, the spool valve assembly described in any one of (1) to (8) further includes a sensor which is disposed in the first chamber and configured to detect displacement of the first spool in the axial direction of the first spool.
   According to the spool valve assembly described in the above (9), a sensor for detecting displacement of the first spool is disposed in the first chamber, where it is easy to secure relatively large space corresponding to the first pressure-receiving surface whose area is larger than that of the second pressure-receiving surface, thereby facilitating the layout of the sensor.
(10) In some embodiments, the spool valve assembly described in any one of (1) to (9) further includes a relief valve configured to open when the pressure in the hydraulic chamber exceeds a setting pressure which is not lower than the pressure of the high pressure oil line.
   In a case where powders or the like (e.g. metal powders) included in the oil have gotten stuck inside the first spool valve and operation of the first spool is stopped, the first spool being positioned so that the hydraulic chamber is in communication with neither of the high pressure oil line nor the low pressure oil line may cause the pressure in the hydraulic chamber to increase considerably accompanying operation of the hydraulic machine. Here, by providing the relief valve described in the above (3), it is possible to maintain pressure of the hydraulic chamber within a setting range of pressure even in a case where the first spool is shutdown as described above.
(11) In some embodiments, a hydraulic machine includes a hydraulic chamber, a high pressure oil line, a low pressure oil line, and a spool valve assembly configured to switch a communication state of the hydraulic chamber between a first state where the hydraulic chamber is in communication with the high pressure oil line and a second state where the hydraulic chamber is in communication with the low pressure oil line. Also, the
   spool valve assembly is one according to any one of the above (1) to (10).
   According to the hydraulic machine described in (11), the second pressure-receiving surface of the first spool has an area smaller than that of the first pressure-receiving surface. Thus, when applying the pressure of the high pressure oil line to each of the first and second pressure-receiving surfaces, the first pressure-receiving surface receives larger force than the second pressure-receiving surface. On the other hand, when applying the first pressure, which is lower than the pressure of the high pressure oil line, to the first pressure-receiving surface in a state where the pressure of the high pressure oil line is applied to the second pressure-receiving surface, it is possible to make the force received by the first pressure-receiving surface smaller than the force received by the second pressure-receiving surface. Accordingly, by switching hydraulic pressure of the first chamber between the pressure of the high pressure oil line and the first pressure, which is lower than the pressure of the high pressure oil line, while maintaining hydraulic pressure of the second chamber at the pressure of the high pressure oil line, it is possible to switch a communication state of the hydraulic chamber between the first state, where the hydraulic chamber is in communication with the high pressure oil line, and the second state, where the hydraulic chamber is in communication with the low pressure oil line, by a simplified configuration in which one of hydraulic pressures which act on the first pressure-receiving surface and hydraulic pressure which acts on the second pressure-receiving surface are standardized. Also, it is possible to switch the communication state between the first state and the second state by a simplified configuration in which the pressure of the high pressure oil line inherently included in the hydraulic machine is used as a standardized pressure for the first and second pressure-receiving surfaces.
   Further, according to the spool valve assembly described above, the second pressure-receiving surface of the first spool has an area smaller than that of the first pressure-receiving surface. Thus, when applying the pressure of the low pressure oil line to each of the first and second pressure-receiving surfaces, the first pressure-receiving surface receives larger force than the second pressure-receiving surface. On the other hand, when applying the second pressure, which is higher than the pressure of the low pressure oil line, to the second pressure-receiving surface in a state where the pressure of the low pressure oil line is applied to the first pressure-receiving surface, it is possible to make the force received by the second pressure-receiving surface larger than the force received by the first pressure-receiving surface by setting the second pressure at an appropriate pressure. Accordingly, by switching hydraulic pressure of the second chamber between the pressure of the low pressure oil line and the second pressure, which is higher than the pressure of the low pressure oil line, while maintaining hydraulic pressure of the first chamber at the pressure of the low pressure oil line, it is possible to switch a communication state of the hydraulic chamber between the first state and the second state by a simplified configuration in which one of hydraulic pressures which act on the second pressure-receiving surface and hydraulic pressure which acts on the first pressure-receiving surface are standardized. Also, it is possible to switch the communication state between the first state and the second state by a simplified configuration in which the pressure of the low pressure oil line inherently included in the hydraulic machine is used as a standardized pressure for the first and second pressure-receiving surfaces.
(12) In some embodiments, a power generating apparatus for generating electric power from renewable energy includes a main shaft configured to rotate by using the renewable energy, a hydraulic machine configured to be driven by rotation of the main shaft; and a generator configured to be driven by the hydraulic machine. Also, the hydraulic machine is one described in (11).

According to the power generating apparatus described in (12), the second pressure-receiving surface of the first spool has an area smaller than that of the first pressure-receiving surface. Thus, when applying the pressure of the high pressure oil line to each of the first and second pressure-receiving surfaces, the first pressure-receiving surface receives larger force than the second pressure-receiving surface. On the other hand, when applying the first pressure, which is lower than the pressure of the high pressure oil line, to the first pressure-receiving surface in a state where the pressure of the high pressure oil line is applied to the second pressure-receiving surface, it is possible to make the force received by the first pressure-receiving surface smaller than the force received by the second pressure-receiving surface by setting the first pressure at an appropriate pressure. Accordingly, by switching hydraulic pressure of the first chamber between the pressure of the high pressure oil line and the first pressure, which is lower than the pressure of the high pressure oil line, while maintaining hydraulic pressure of the second chamber at the pressure of the high pressure oil line, it is possible to switch a communication state of the hydraulic chamber between the first state, where the hydraulic chamber is in communication with the high pressure oil line, and the second state, where the hydraulic chamber is in communication with the low pressure oil line, by a simplified configuration in which one of hydraulic pressures which act on the first pressure-receiving surface and hydraulic pressure which acts on the second pressure-receiving surface are standardized. Also, it is possible to switch the communication state between the first state and the second state by a simplified configuration in which the pressure of the high pressure oil line inherently included in the hydraulic machine is used as a standardized pressure for the first and second pressure-receiving surfaces. Further, according to the spool valve assembly described above , the second pressure-receiving surface of the first spool has an area smaller than that of the first pressure-receiving surface. Thus, when applying the pressure of the low pressure oil line to each of the first and second pressure-receiving surfaces, the first pressure-receiving surface receives larger force than the second pressure-receiving surface. On the other hand, when applying the second pressure, which is higher than the pressure of the low pressure oil line, to the second pressure-receiving surface in a state where the pressure of the low pressure oil line is applied to the first pressure-receiving surface, it is possible to make the force received by the second pressure-receiving surface larger than the force received by the first pressure-receiving surface by setting the second pressure at an appropriate pressure. Accordingly, by switching hydraulic pressure of the second chamber between the pressure of the low pressure oil line and the second pressure, which is higher than the pressure of the low pressure oil line, while maintaining hydraulic pressure of the first chamber at the pressure of the low pressure oil line, it is possible to switch a communication state of the hydraulic chamber between the first state and the second state by a simplified configuration in which one of hydraulic pressures which act on the second pressure-receiving surface and hydraulic pressure which acts on the first pressure-receiving surface are standardized. Also, it is possible to switch the communication state between the first state and the second state by a simplified configuration in which the pressure of the low pressure oil line inherently included in the hydraulic machine is used as a standardized pressure for the first and second pressure-receiving surfaces. As result, it is possible to drive the hydraulic machine and the generator by a simplified configuration.

According to some embodiments of the present invention, it is possible to switch the spool valve by a simplified configuration in which at least part of hydraulic pressures which act on each pressure-receiving surface of the spool is standardized.

### BRIEF DESCRIPTION OF DRAWINGS

FIG. 1 is a schematic diagram of a configuration of a wind turbine power generating apparatus according to some embodiments.
FIG. 2 is a schematic diagram of a configuration of a hydraulic motor according to some embodiments.
FIG. 3 is a hydraulic circuit diagram of a spool valve assembly according to some embodiments.
FIG. 4 is a schematic cross-sectional view of a spool valve assembly according to some embodiments.
FIG. 5 is a schematic cross-sectional view of a spool valve assembly according to some embodiments.
FIG. 6A is a schematic perspective view of a first spool according to some embodiments, and FIG. 6B is a schematic perspective view of a sleeve according to some embodiments.
FIG. 7A is a schematic perspective view of a first end wall, and FIG. 7B is a schematic perspective view of a second end wall.
FIG. 8 is a schematic cross-sectional view of a switching valve according to some embodiments.
FIG. 9 is a schematic cross-sectional view of a switching valve according to some embodiments.
FIG. 10 is a schematic cross-sectional view of a spool valve assembly according to some embodiments.
FIG. 11 is a hydraulic circuit diagram of a spool valve assembly according to some embodiments.
FIG. 12 is a schematic cross-sectional view of a spool valve assembly according to some embodiments.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the following embodiments, a power generating apparatus according to some embodiments of the present invention will be described by an example illustrating a wind turbine generating apparatus which generates electric power from wind energy as renewable energy. However, as a generating apparatus, the present invention may be applied to other renewable energy generating apparatuses such as a tidal current generating apparatus, an ocean current generating apparatus, and a river current generating apparatus.

### (Wind turbine generating apparatus)

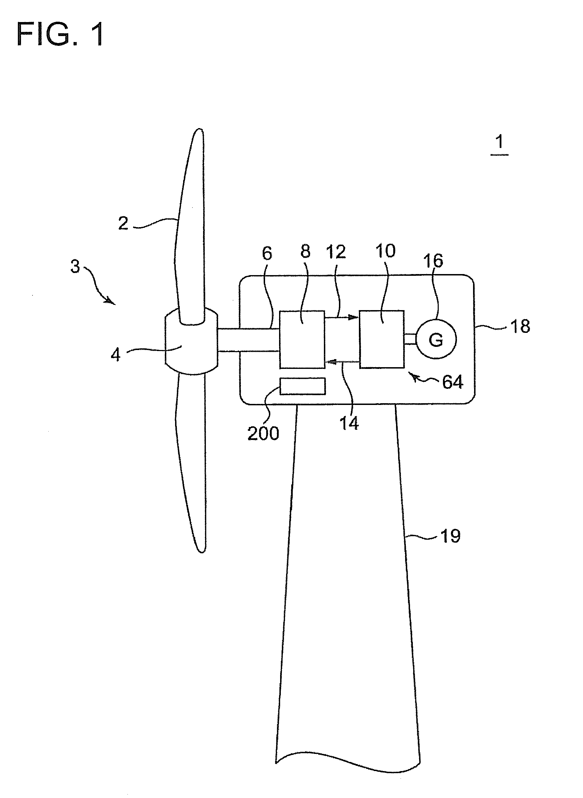

FIG. 1 is a schematic diagram of a wind turbine generating apparatus according to some embodiments. A wind turbine generating apparatus 1 illustrated in FIG. 1 includes a rotor 3 having at least one blade 2 and a hub 4.

To the rotor 3 of the wind turbine generating apparatus illustrated in FIG. 1, a hydraulic pump 8 is coupled via the rotational shaft 6. To the hydraulic pump 8, a hydraulic motor 10 is connected via a high pressure oil line 12 and a low pressure oil line 14. Specifically, an outlet of the hydraulic pump 8 is connected to an inlet of the hydraulic motor 10 via the high pressure oil line 12, and an inlet of the hydraulic pump 8 is connected to an outlet of the hydraulic motor 10 via the low pressure oil line 14. The hydraulic pump 8 is driven by the rotational shaft 6 to increase pressure of operating oil, thereby producing high-pressure operating oil (pressurized oil). The pressurized oil produced by the hydraulic pump 8 is supplied to the hydraulic motor 10 via the high pressure oil line 12 to drive the hydraulic motor 10. The low-pressure operating oil after having performed work in the hydraulic motor 10 is returned again to the hydraulic pump 8 through the low pressure oil line 14 disposed between the outlet of the hydraulic motor 10 and the inlet of the hydraulic pump 8.

A generator 16 is coupled to the hydraulic motor 10. In one embodiment, the generator 16 is a synchronous generator connected to a utility grid and driven by the hydraulic motor 10.

Here, at least a part of the rotational shaft 6 is covered by a nacelle 18 disposed on a tower 19. In one embodiment, the hydraulic pump 8, the hydraulic motor 10 and the generator 16 are disposed inside the nacelle 18.

In the wind turbine generating apparatus 1 illustrated in FIG. 1, rotational energy of the rotor 3 is inputted into the generator 16 via a hydraulic transmission 64 being a hydraulic machine including the hydraulic pump 8 and the hydraulic motor 10, so that electric power is generated in the generator 16.

Operation of each device making up the wind turbine generating apparatus 1 is controlled by a control part 200.

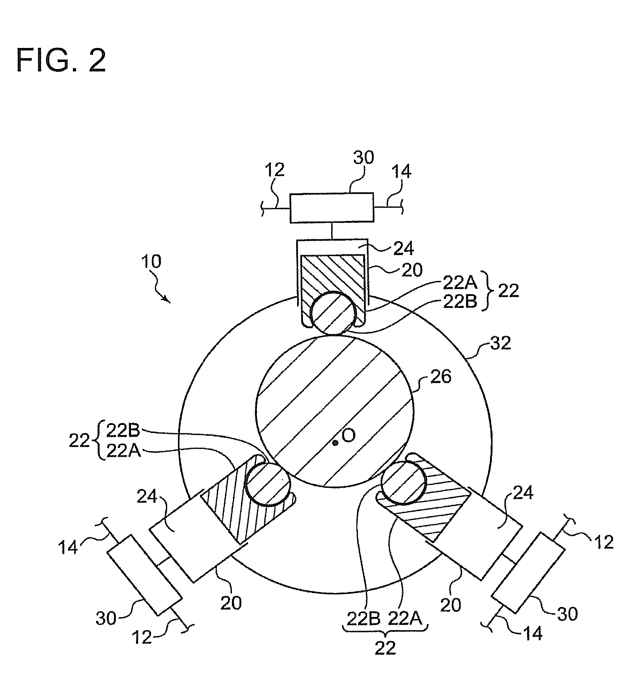

FIG. 2 is a schematic diagram for describing a configuration of the hydraulic motor 10.

As illustrated in FIG. 2, the hydraulic motor 10 includes a plurality of hydraulic chambers 24 each formed by a cylinder 20 and a piston 22, a cam 26 having a cam curved surface which is configured to be in contact with the pistons 22, spool valve assemblies 30 each provided for corresponding one of the hydraulic chambers 24, a high pressure oil line 12, and a low pressure oil line 14.

From the perspective of converting vertical reciprocating motion of the pistons 22 into rotational motion of the cam 26 smoothly, each piston 22 may include a piston body 22A which slides inside a corresponding cylinder 20, a piston roller or a piston shoe which is attached to the piston body 22A to be in contact with the cam curved surface of the cam 26. Here, FIG. 2 illustrates an example in which a piston 22 includes a piston body 22A and a piston roller 22B.

The cam 26 is an eccentric cam which is eccentric with respect to an axial center O of a rotational shaft (crank shaft) 32 of the hydraulic motor 10 connected to the generator 16. While the piston 22 completes a single vertical reciprocal motion, the cam 26 and the rotational shaft 32 to which the cam 26 is attached complete a single rotation.

In other embodiments, the cam 26 is an annular multi-lobed cam (ring cam) having a plurality of lobes (convex portions). In this case, while the cam 26 and the rotational shaft 32 to which the cam 26 is attached complete a single rotation, the piston 22 completes vertical reciprocal motions of a number equal to the number of the lobes.

Each spool valve assembly 30 is configured to switch a communication state of the hydraulic chamber between the first state where the hydraulic chamber 24 is in communication with the high pressure oil line 12 and the second state where the hydraulic chamber 24 is in communication with the low pressure oil line 14.

### (Spool valve assembly)

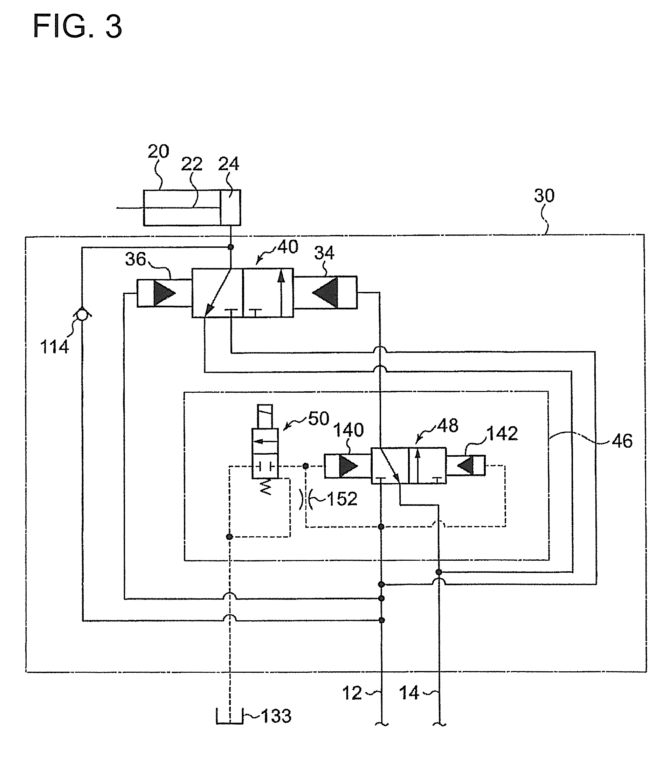

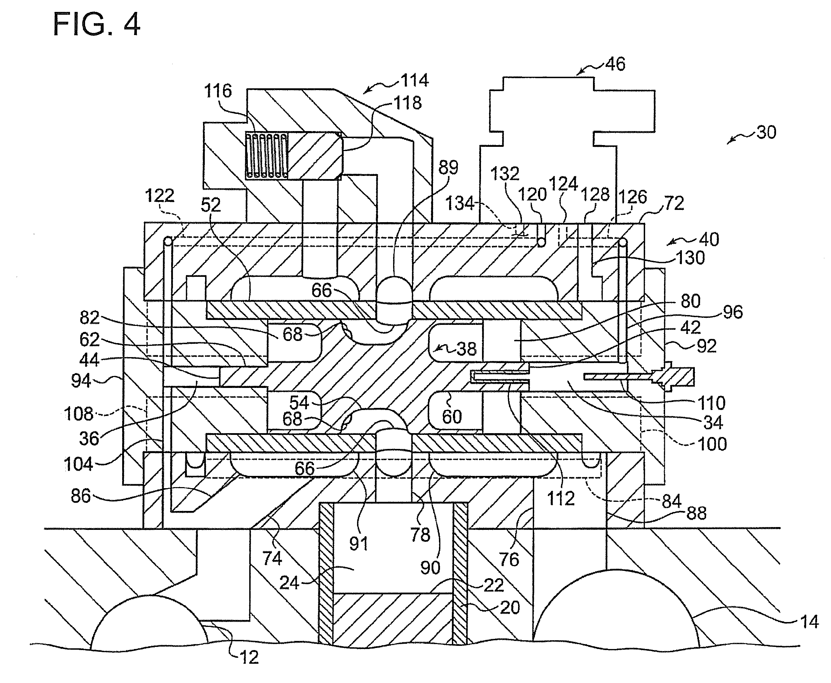

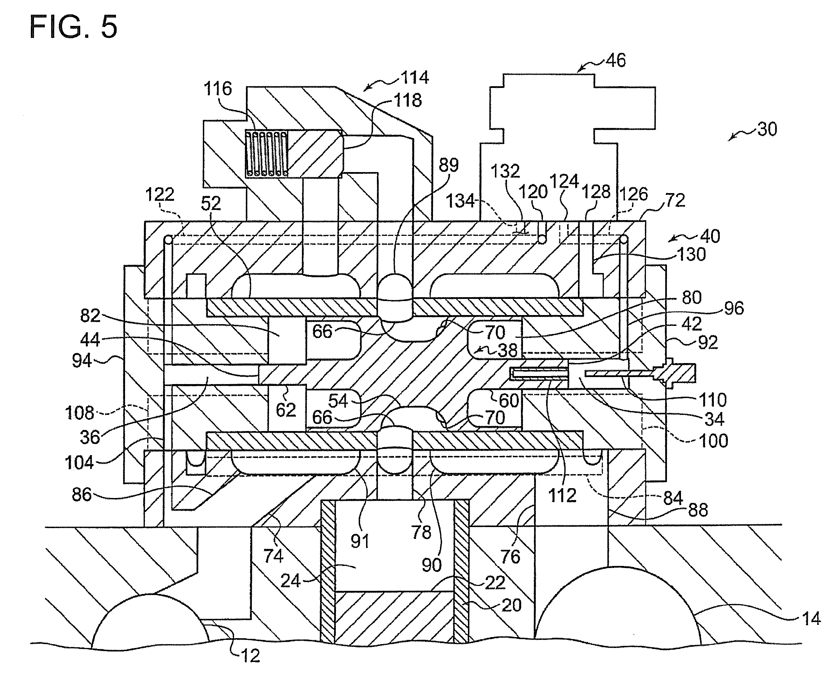

Next, an exemplary configuration of the spool valve assembly 30 will be described in reference to FIGs. 3 to 5. FIG. 3 is a schematic hydraulic circuit diagram of the spool valve assembly 30 according to some embodiments. FIG. 4 is a schematic cross-sectional view of the spool valve assembly 30 illustrated in FIG. 3, illustrating the first state where the hydraulic chamber 24 is in communication with the high pressure oil line 12. FIG. 5 illustrates the spool valve assembly 30 of FIG. 4 in the second state where the hydraulic chamber 24 is in communication with the low pressure oil line 14.

The spool valve assembly 30 illustrated in FIGs. 3 to 5 has a first spool valve 40 including a first chamber 34, a second chamber 36, and a first spool 38. The first spool 38 includes a first pressure-receiving surface 42 formed so as to receive hydraulic pressure of the first chamber 34 and a second pressure-receiving surface 44 formed so as to receive hydraulic pressure of the second chamber 36. The area of the second pressure-receiving surface 44 is smaller than that of the first pressure-receiving surface 44.

The first spool valve 40 is configured to switch a communication state of the hydraulic chamber between the first state and the second state by switching the hydraulic pressure of the first chamber 34 between the pressure of the high pressure oil line 12 and the first pressure (preferably, the pressure of the low pressure oil line 14) which is smaller than the pressure of the high pressure oil line 12 while maintaining the hydraulic pressure of the second chamber 36 at the pressure of the high pressure oil line 12.

As described above, since the second pressure-receiving surface 44 of the first spool 38 has an area smaller than that of the first receiving surface 42, the force received by the first pressure-receiving surface 42 is greater than the force received by the second pressure-receiving surface 44 when the pressure of the high pressure oil line 12 is applied to each of the first and second pressure-receiving surfaces 42, 44. Meanwhile, when the first pressure being lower than the pressure of the high pressure oil line 12 is applied to the first pressure-receiving surface 42 in a state where the pressure of the high pressure oil line 12 is applied to the second pressure-receiving surface 44, adequately large pressure difference between the first pressure and the pressure of the high pressure oil line 12 can make the force received by the first pressure-receiving surface smaller than that received by the second pressure-receiving surface 44.

Accordingly, by switching the hydraulic pressure of the first chamber 34 between the pressure of the high pressure oil line 12 and the first pressure, which is lower than the pressure of the high pressure oil line 12, while maintaining the hydraulic pressure of the second chamber 36 at the pressure of the high pressure oil line 12, it is possible to switch the communication state of the hydraulic chamber between the first state, where the hydraulic chamber 24 is in communication with the high pressure oil line 12, and the second state, where the hydraulic chamber 24 is in communication with the low pressure oil line 14, with a simplified configuration in which one of hydraulic pressure which act on the first pressure-receiving surface 42 and the hydraulic pressure acting on the second pressure-receiving surface 44 are standardized. Further, it is possible to switch a communication state of the hydraulic chamber between the first state and the second state, with a simplified configuration in which the pressure of the high pressure oil line 12, which is inherently included in the hydraulic machine, is utilized as the standardized hydraulic pressure of the first and second pressure-receiving surfaces 42, 44.

Here, in order to make the force received by the first pressure-receiving surface 42 smaller than the force received by the second pressure-receiving surface 44, the area of each pressure-receiving surface 42, 44 and the first pressure may be set such that a product of the area of the first pressure-receiving surface of the first pressure is smaller than a product of the area of the second pressure-receiving surface 44 and the high pressure oil line 12.

In some embodiments, it is possible to move the first spool by utilizing only the net force caused by hydraulic pressure. In other embodiments, in addition to the net force caused by hydraulic pressure, it is possible to use other forces such as spring force. In this case, for instance, the second pressure-receiving surface 44 may be biased by a spring (not illustrated) toward a direction in which the first pressure-receiving surface 42 resists the pressure from the first chamber 34, and then the area of each pressure-receiving surface, the first pressure and the setting pressure of the spring may be set such that a product of the area of the first pressure-receiving surface 42 and the first pressure is smaller than a resultant force of a product of the area of the second pressure-receiving surface 44 and the pressure of the high pressure oil line 12 and the biasing force of the spring.

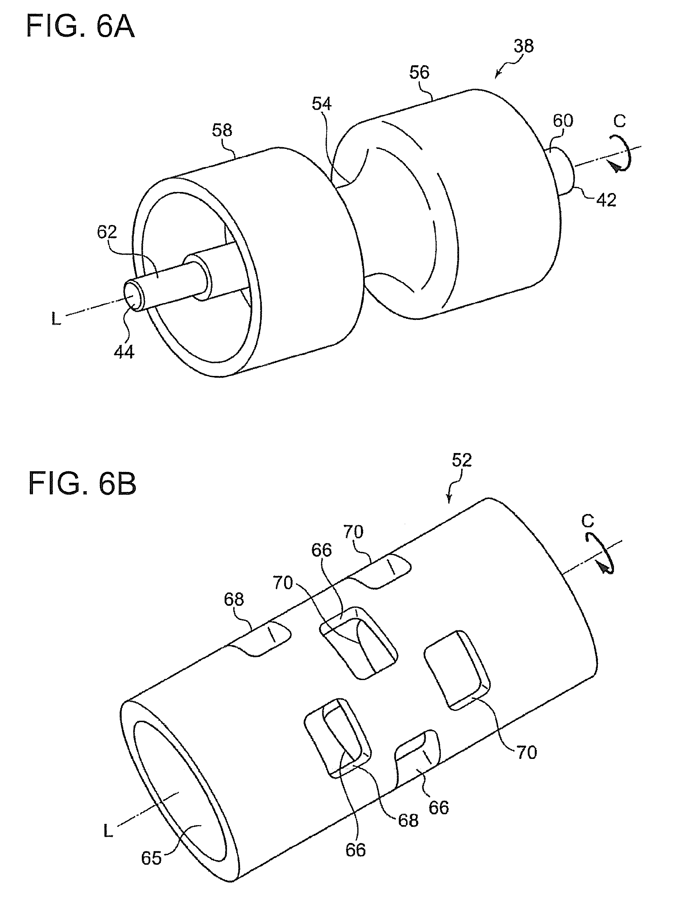

The first spool valve 40 illustrated in FIG. 4 includes a sleeve 52 which houses the first spool 38. Now the detailed configurations of the first spool 38 and the sleeve 52 will be described in reference to FIG. 6A and FIG. 6B.

FIG. 6A is a schematic perspective view of the first spool 38, and FIG. 6B is a schematic perspective view of the sleeve 52.

As illustrated in FIG. 6A, the first spool 38 includes an annular groove 54, a first land portion 56, a second land portion 58, a first piston portion 60, and a second piston portion 62, all of which are integrally formed. The annular groove 54 is disposed on the center part of the first spool 39 in the axial direction L of the first spool 38 (hereinafter, unless otherwise recited, "axial direction" means the axial direction L of the first spool 38, i.e., the axial direction L of the sleeve 52). The first and second land portions 56, 58 are disposed adjacent to the annular groove 54 so as to sandwich the annular groove 54. The first spool 38 is configured such that each land portion 56, 58 reciprocates in the axial direction with respect to the inner circumferential surface 65 (see FIG. 6B) of the sleeve 52.

Here, the above described first pressure-receiving surface 42 is an end surface of the first piston portion 60, and the second pressure-receiving surface 44 is an end surface of the second piston portion 62. Each of the first and second piston portions 60, 62 of the first spool 38 has a substantially cylindrical shape. The first spool 38 is configured such that the outer diameter of the second piston portion 62 is smaller than the outer diameter of the first piston portion 60 in order to make the area of the second pressure-receiving surface 44 smaller than the area of the first pressure-receiving surface 42.

As illustrated in FIG. 6B, the sleeve 52 includes a plurality of hydraulic chamber ports 66 which communicate with the hydraulic chamber 24 (see FIG. 4), a plurality of high-pressure ports 68 which communicate with the high pressure oil line 12 (see FIG. 4), and a plurality of low-pressure ports 70 which communicate with the low pressure oil line 14 (see FIG. 5). The plurality of hydraulic-chamber ports 66 are formed on the same position in the axial direction and with equal intervals in the circumferential direction C (hereinafter, unless otherwise stated, "circumferential direction" indicates the circumferential direction C of the sleeve, i.e., the circumferential direction C of the first spool 38). Further, the plurality of high-pressure ports 68 are formed on the same position in the axial direction and with equal intervals in the circumferential direction. Similarly, the plurality of low-pressure ports 70 are formed on the same position in the axial direction and with equal intervals in the circumferential direction. The position in the circumferential direction of the high-pressure ports 68 is the same as that of the low-pressure ports 70. The position in the circumferential direction of the hydraulic chamber ports 66 is off the positions in the circumferential direction of the high-pressure ports 68 and the low-pressure ports 70.

The state of the spool valve assembly 30 illustrated in FIG. 4 is the first state where the high-pressure ports 68 are in communication with the hydraulic chamber ports 66 through the annular groove 54 and thereby the high pressure oil line 12 is brought into communication with the hydraulic chamber 24. On the other hand, the state of the spool valve assembly 30 illustrated in FIG. 5 is the second state where the low-pressure ports 70 are in communication with the hydraulic chamber ports 66 through the annular groove 54 and thereby the low pressure oil line 14 is brought into communication with the hydraulic chamber 24.

In some embodiments, as illustrated in FIG. 4, the first spool valve 40 includes a casing 72 which houses the sleeve 52.

The casing 72 illustrated in FIG. 4 includes a high pressure communication path 74 configured to bring the high-pressure ports 68 and the high pressure oil line 12 into communication, a low pressure communication path 76 configured to bring the low-pressure ports 70 and the low pressure oil line 14 into communication, and a hydraulic chamber communication path 78 configured to bring the hydraulic chamber ports 66 and the hydraulic chamber 24 into communication.

Accordingly, the above described first state illustrated in FIG. 4 is achieved by a path being formed between the high pressure oil line 12 and the hydraulic chamber 24 by the high pressure communication path 74, the high-pressure ports 68, the annular groove 54, the hydraulic chamber ports 66, and the hydraulic chamber communication path 78. Further, the above described second state illustrated in FIG. 5 is achieved by a path being formed between the low pressure oil line 14 and the hydraulic chamber 24 by the low pressure communication path 76, the low-pressure ports 70, the annular groove 54, the hydraulic chamber ports 66, and the hydraulic chamber communication path 78.

The first spool valve 40 illustrated in FIG. 4 includes a first drain chamber 80 on the side of one end of the first spool 38 in the axial direction and a second drain chamber 82 on the side of the other end thereof. The first drain chamber 80 and the second drain chamber 82 are in communication with each other through a first drain flow path 84 disposed inside the casing 72.

As described above, as the first drain chamber 80 and the second drain chamber 82 are in communication with each other through the first drain flow path 84 disposed inside the casing 72, pressure of the first drain chamber 80 and pressure of the second drain chamber 82 are always equal regardless of the position of the first spool 38. Accordingly, There may be no pressure difference caused between the first drain chamber 80 and the second drain chamber 82, and thus movement and position of the first spool 38 may not be affected by such a pressure difference. As a result, it is possible to control operation of the first spool 38 more securely by hydraulic pressure of the first chamber 34 and the second chamber 36.

Here, the high pressure communication path 74 illustrated in FIG. 4 includes an inclined hole part 86 which is inclined with respect to the radial direction of the sleeve 52 so as to avoid the first drain flow path 84, in order to bring the high-pressure ports 68 closer to the center in the axial direction with respect to the high pressure oil line 12 to realize a compact first spool valve 40 while preventing the high pressure communication path 74 from intervening the drain flow path 84.

On the other hand, the low pressure communication path 76 includes a simple vertical hole part 88 which extends in the radial direction of the sleeve 52, because there may be no problem in that the low pressure oil line 14 communicates with the drain flow path 84 when pressure of the low pressure oil line 14 is equal to that of the drain flow path 84. Further, in order to bring the low-pressure ports 70 closer to the center in the axial direction with respect to the low pressure oil line 14 to achieve a compact first spool valve 40, the low pressure communication path 76 is formed such that the length in the axial direction of a sleeve-side opening 90 (annular flow path) of the low pressure communication path 76 is longer than the length in the axial direction of a sleeve-side opening 91 (annular flow path) of the high pressure communication path 74.

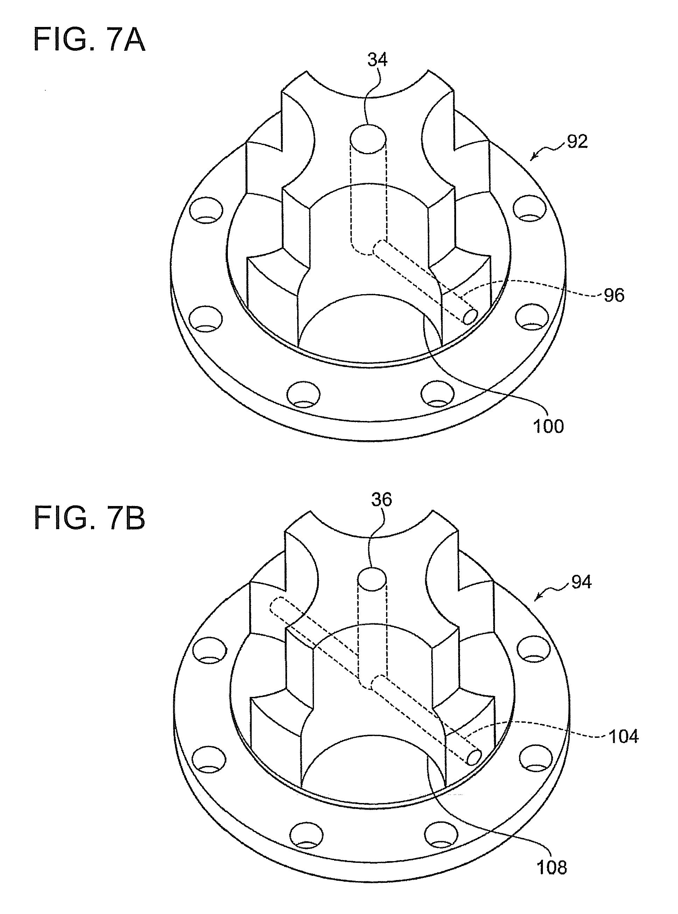

The first spool valve 40 illustrated in FIG. 4 includes a first end wall 92 disposed on the side of one end of the sleeve 52 and a second end wall 94 disposed on the side of the other end of the sleeve. FIG. 7A is a schematic perspective view of the first end wall 92, and FIG. 7B is a schematic perspective view of the second end wall 94.

The first end wall 92 illustrated in FIGs. 4 and 7A includes a first end wall flow path 96 disposed inside. The first end wall flow path 96 selectively communicates to either the high pressure oil line 12 or the low pressure oil line 14 in accordance with the switching of the switching valve 46. The first end wall flow path 96 includes the first chamber 34 disposed along the axial direction, and is configured such that the first piston portion 60 included in the first spool 38 slides with respect to the inner circumferential face of the first chamber 34. The first end wall 92 includes a plurality of cut-outs 100 formed in the circumferential direction at equal intervals.

The second end wall 94 included in FIGs. 4 and 7B includes a second end wall flow path 104 inside thereof which is configured to be constantly in communication with the high pressure oil line 12. The second end wall flow path 104 includes a second chamber 36 disposed along the axial direction, and is configured such that the second piston portion 62 included in the first spool 38 is configured to slide with respect to the inner circumferential face of the second chamber 36. The second end wall 94 includes a plurality of cut-outs 108 formed in the circumferential direction at equal intervals.

The first drain chamber 80 illustrated in FIG. 4 is formed between the first end wall 92 and the first spool 38, while the second drain chamber 82 is formed between the second end wall 94 and the first spool 38. In the above described first state, the first drain chamber 80 is formed by being surrounded by the first end wall 92, the sleeve 52, and the first spool 38. In the above described second state, the second drain chamber 82 is formed by being surrounded by the second end wall 94, the sleeve 52, and the first spool 38. The first drain chamber 80 and the second drain chamber 82 illustrated in FIG. 4 are in communication with each other through the cut-outs 100 of the first end wall 92, the first drain flow path 84 disposed in the casing 72, and the cut-outs 108 of the second end wall 94. Further, the drain flow path 84 is in communication with the low pressure oil line 14. As described above, it is possible to bring the first drain chamber 80 into communication with the first drain flow path 84 by a simple configuration by providing the cut-outs 100, while enhancing sealability against oil of the first spool valve 40 by the first end wall 92 disposed on the side of one end of the sleeve 52 in the axial direction. Further, it is possible to bring the second drain chamber 82 into communication with the second first drain flow path 84 by a simple configuration by providing the cut-outs 108, while enhancing sealability against oil of the first spool valve 40 by the second end wall 94 disposed on the side of the other end of the sleeve 52 in the axial direction.

The first spool valve 40 illustrated in FIG.4 includes a sensor 110 for detecting displacement of the first spool 38 in the axial direction. The sensor 110 is disposed on the first chamber 34. In this manner, the sensor 110 for detecting displacement of the first spool 38 is disposed on the first chamber 34, which is likely to have a relatively large space corresponding to the first pressure-receiving surface 42 having an area larger than that of the second pressure-receiving surface 44. As a result, layout of the sensor 110 is facilitated.

Here, as a sensor 110, a displacement sensor of an eddy-current type may be used. In this case, the sensor 110 is a coil sensor and high-frequency signals of about a few MHz are supplied to the sensor 110 from an oscillator circuit which is not illustrated in the drawings. When the distance between the sensor 110 and a copper tube 112 being a target metal illustrated in FIG. 4 changes while the high-frequency signals are being supplied to the sensor 110, eddy current on the surface of the copper tube 112 varies in response to the change in the distance. Thus, it is possible to detect the displacement of the first spool 38 from the change in the impedance of the sensor 110 caused by the change in the eddy current.

The spool valve assembly 30 illustrated in FIG. 4 includes a relief valve 114. The relief valve 114 includes a spring 116 and a poppet valve 118 which is biased by the spring 116, and is configured such that the poppet valve 118 opens to bring the hydraulic chamber 24 into communication with the high pressure oil line 12 when pressure of the hydraulic chamber 24 exceeds a setting pressure which is not lower than pressure of the high pressure oil line 12. In a case where powders or the like included in the oil (e.g. metal powders) have gotten stuck inside the first spool valve 40 and operation of the first spool 38 is stopped, the first spool 38 being positioned so that the hydraulic chamber 24 is in communication with neither of the high pressure oil line 12 nor the low pressure oil line 14 may cause the pressure of the hydraulic chamber 24 to increase considerably as the piston 22 ascends. Here, by providing the relief valve 114, it is possible to maintain pressure of the hydraulic chamber 24 within a setting pressure even in the case where the first spool 38 is shutdown as described above.

Further, the casing 72 illustrated in FIG. 4 includes an annular flow path 89. The annular flow path 89 is formed circumferentially around the sleeve 52 (around the annular groove 54) at the same position as that of the hydraulic chamber ports 66 in the axial direction of the first spool 38 (the same position as that of the hydraulic chamber communication path 78). Further, the annular flow path 89 is positioned at a position that allows the annular flow path 89 to be always in communication with the annular groove 54 regardless of the position of the first spool 38. As a result, it is possible to establish a good communicating state between the relief valve 114 and the hydraulic chamber 24 through the annular groove 54 and the annular flow path 89.

Here, in a case where a plurality of hydraulic chambers 24 are arranged along the axial direction of a hydraulic motor 10 of a radial piston type, a plurality of spool valve assemblies 30 would also be arranged along the axial direction of the hydraulic motor 10. In this case, from the perspective of preventing the intervention among the spool valve assemblies 30 arranged adjacent to one another in the axial direction of the hydraulic motor 10, it is desirable to dispose the relief valve 114 and the switching valve 46 on the radially outer side of the hydraulic motor 10 with respect to the first spool valve 40 as illustrated in FIG. 4.

The casing 72 illustrated in FIG. 4 includes a high pressure supply path 122, a selective supply path 126, a low pressure supply path 130, and a tank communication path 134. The high pressure supply path 122 is formed between the second end wall flow path 104 and a high-pressure port 120 of the switching valve 46, which will be described below, so as to supply high pressure oil to the high-pressure port 120 from the high pressure oil line 12. The selective supply path 126 is formed between an output port 124 of the switching valve 46 and the first end wall flow path 96 so as to selectively supply high pressure oil or the first-pressure oil (low pressure oil) to the first chamber 34 from the output port 124. The low pressure supply path 130 is formed between a low-pressure port 128 of the switching valve 46 and the low pressure communication path 76 so as to supply low pressure oil to the low-pressure port 128 from the low pressure oil line 14. The tank communication path 134 is for discharging high pressure oil to a drain tank 133 (see FIG. 3) from a discharge port 132 of the switching valve 46.

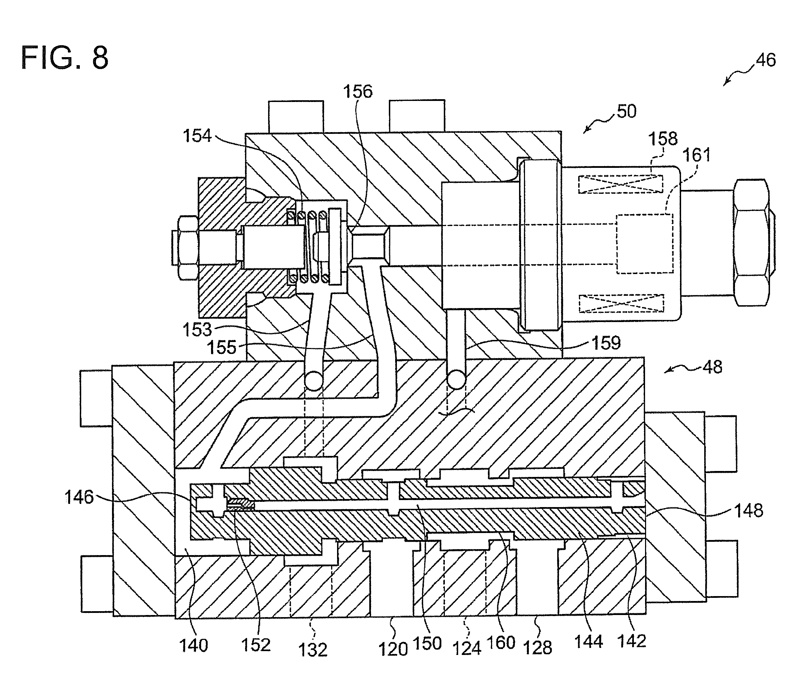

Next, the switching valve 46 will be described in reference to FIG. 8. FIG. 8 is a schematic cross-sectional view of the switching valve 46 according to some embodiments.

The switching valve 46 includes a second spool valve 48 for switching the hydraulic pressure of the first chamber (see FIG. 4) from the first pressure and the pressure of the high pressure oil line 12 and a solenoid valve 50 for operating the second spool valve 48.

As a result, compared to a case in which hydraulic pressure of the first chamber 34 is switched between the pressure of the high pressure oil line and the first pressure by a solenoid valve 50 alone without using the second spool valve 48, it is possible to increase a flow rate of the oil which can be used for the switching.

Further, in the wind turbine generating apparatus 1 illustrated in FIG. 1, it is necessary to switch between the above described first state and second state of the spool valve assembly 30 at high speed in accordance with the high-speed rotation of the synchronous generator 16. In this case, by increasing the flow rate of the oil which can be used for the switching by using the second spool valve 48 and the solenoid valve 50, it is possible to realize high-speed switching between the first state and the second state.

The second spool valve 48 includes a third chamber 140, a fourth chamber 142, and a second spool 144. The second spool 144 includes a third pressure-receiving surface 146 formed so as to receive hydraulic pressure of the third chamber 140 and a fourth pressure-receiving surface 148 formed so as to receive hydraulic pressure of the fourth chamber 142 and have an area smaller than that of the third pressure-receiving surface 146. The second spool valve 48 is configured to switch hydraulic pressure of the first chamber 34 (see FIG. 4) between the first pressure and the pressure of the high pressure oil line 12 by switching hydraulic pressure of the third chamber 140 between the pressure of the high pressure oil line 12 and the third pressure which is smaller than the pressure of the high pressure oil line 12 while maintaining pressure of the fourth chamber 142 at pressure the high pressure oil line 12.

As described above, the area of the fourth pressure-receiving surface 148 of the second spool 144 is smaller than the area of the third pressure-receiving surface 146. Thus, in a case where the pressure of the high pressure oil line 12 is applied to each of the third pressure-receiving surface 146 and the fourth pressure-receiving surface 148, the third pressure-receiving surface 146 receives force larger than the force received by the fourth pressure-receiving surface 148. On the other hand, in a case where the third pressure smaller than the pressure of the high pressure oil line is applied to the third pressure-receiving surface 146 in the state where the pressure of the high pressure oil line is applied to the fourth pressure-receiving surface 148, it is possible to make the force received by the third pressure-receiving surface 146 smaller than the force received by the fourth pressure-receiving surface 148 by setting the third pressure appropriately.

Accordingly, by switching hydraulic pressure of the third chamber 140 between the pressure of the high pressure oil line 12 and the third pressure which is smaller than pressure of the high pressure oil line 12 while maintaining hydraulic pressure of the fourth chamber 142 at the pressure of the high pressure oil line 12, it is possible to switch hydraulic pressure of the first chamber 34 of the first spool valve 40 by a simplified configuration in which one of hydraulic pressures which act on the third pressure-receiving surface 146 and hydraulic pressure which acts on the fourth pressure-receiving surface 148 are standardized. Further, it is possible to switch hydraulic pressure of the first chamber 34 of the first spool valve 40 by a simplified configuration in which the pressure of the high pressure oil line 12 inherently included in the hydraulic transmission 64 being a hydraulic machine is used as a standardized pressure for the third pressure-receiving surface 146 and the fourth pressure-receiving surface 148.

Further, the third pressure-receiving surface 146 in FIG. 8 indicates any surface facing the third chamber 140 among the end surfaces of the second spool 144 in the axial direction of the second spool 144. Also, the fourth pressure-receiving surface 148 in FIG. 8 indicates any surface facing the fourth chamber 142 among the end surfaces of the second spool 144 in the axial direction of the second spool 144.

Further, in order to make the force received by the third pressure-receiving surface 146 smaller than the force received by the fourth pressure-receiving surface 148 as described above, for instance, the area of each pressure-receiving surface 146, 148 and the third pressure may be set such that a product of the area of the third pressure-receiving surface 146 and the third pressure is smaller than a product of the area of the fourth pressure-receiving surface 148 and the pressure of the high pressure oil line.

In some embodiments, it is possible to move the second spool 144 by utilizing only the net force caused by hydraulic pressure. In other embodiments, in addition to the net force caused by hydraulic pressure, it is possible to use other forces such as spring force. In this case, for instance, the fourth pressure-receiving surface 148 may be biased by a spring (not illustrated) toward a direction to resist the force received by the third pressure-receiving surface 146, and then the area of each pressure-receiving surface 146, 148, the third pressure and the biasing force of the spring may be set such that a product of the area of the third pressure-receiving surface 146 and the third pressure is smaller than a resultant force of a product of the area of the fourth pressure-receiving surface 148 and the pressure of the high pressure oil line and the biasing force of the spring.

The second spool valve 48 illustrated in FIG. 8 includes the high pressure port 120 and the fourth chamber 142, which are in communication with each other via an inner flow path 150 disposed on the second spool 144, and the pressure in the fourth chamber 142 is maintained at the pressure of the high pressure oil line constantly. Further, the high pressure port 120 and the third chamber 140 are in communication with each other via the inner flow path 150. A nozzle portion 152 is disposed in the inner flow path 150 between the high pressure port 120 and the third chamber 140. The third chamber 140 and the discharge port 132 are brought into a communicating state with each other through the lines 153, 155 when the solenoid valve 50 opens, and into a non-communicating state with each other when the solenoid valve closes.

The solenoid valve 50 illustrated in FIG. 8 includes a spring 154, a poppet valve 156, and a solenoid coil 158. The solenoid valve 50 is of a normal-close type. When the solenoid coil 158 is energized, an armature 161 is attracted so that the poppet valve 156 opens, resisting the biasing force of the spring 154. Here, the solenoid valve 50 may be of a normal-open type.

The state of the switching valve 46 illustrated in FIG. 8 is a state where the solenoid valve 50 is closed, and where the pressure of the third chamber 140 and pressure of the fourth chamber 142 each equals to the pressure of the high pressure oil line 12. In this state, the low-pressure port 128 and the output port 124 of the second spool valve 48 are in communication with each other via the annular groove 160 of the second spool 144, i.e., the first chamber 34 (see FIG. 4) of the first spool valve 40 is in communication with the low pressure oil line 14. Also in this state, pressure of the first chamber 34 is equal to the pressure of the low pressure oil line 14.

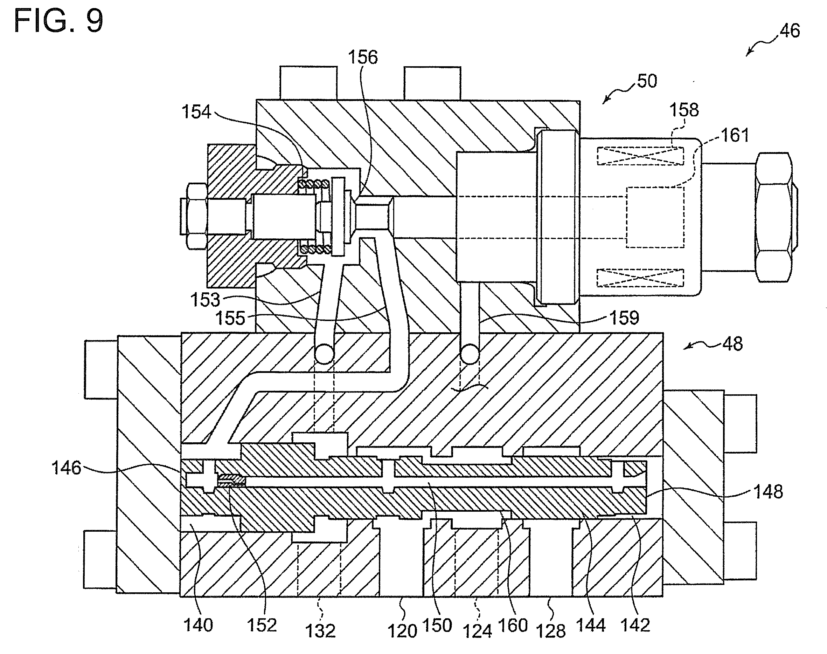

Once the solenoid valve 50 opens from this state, the discharge port 132 communicates with the third chamber 140 to discharge high pressure oil inside the third chamber 140 out into the discharge port 132. As a result, pressure difference occurs on each end of the nozzle portion 152 in the inner flow path 150, and hydraulic pressure of the third chamber 140 decreases from the pressure of the high pressure oil line 12 to the third pressure (pressure of the drain tank 133 herein). In accordance with the decrease in the pressure of the third chamber 140, the position of the second spool 144 moves in the axial direction from the position illustrated in FIG. 8 to the position illustrated in FIG. 9. In the state of the switching valve 46 illustrated in FIG. 9, the high-pressure port 120 is in communication with the output port 124 through the annular groove 160 of the second spool 144, i.e., the first chamber 34 (see FIG. 4) of the first spool valve 40 is in communication with the high pressure oil line 12. In this state, the hydraulic pressure of the first chamber 34 is equal to the pressure of the high pressure oil line 12. Here, in the switching valve illustrated in FIG. 8, a communication path 159 which communicates with the drain tank 133 (see FIG. 3) is disposed to prevent back pressure from occurring upon closing the two-port solenoid valve 50.

Here, the spool valve assembly 30 illustrated mainly in reference to FIG. 4 is configured to switch a communication state of the hydraulic chamber between the first state and the second state by switching hydraulic pressure of the first chamber 34 between the pressure of the high pressure oil line 12 and the first pressure which is smaller than the pressure of the high pressure oil line 12 while maintaining pressure of the second chamber 36 at the pressure of the high pressure oil line 12.

In contrast to this, the configuration of the flow path in the spool vale assembly 30 may be modified so that it is configured to switch a communication state of the hydraulic chamber between the first state and the second state by switching the hydraulic pressure of the second chamber 36 between the pressure of the low pressure oil line 14 and the second pressure (preferably, the pressure of the high pressure oil line), which is higher than the pressure of the low pressure oil line 14 while maintaining the hydraulic pressure in the first chamber 34 at the pressure of the low pressure oil line 14.

As a result, it is possible to switch a communication state of the hydraulic chamber between the first state and the second state by a simplified configuration in which one of hydraulic pressures acting on the second pressure-receiving surface 44 and hydraulic pressure acting on the first pressure-receiving surface 42 are standardized. Further, it is possible to switch a communication state of the hydraulic chamber between the first state and the second state with a simplified configuration in which the pressure of the low pressure oil line 14, which is inherently included in the hydraulic transmission 64 being a hydraulic machine, is used as the standardized hydraulic pressure of the first and second pressure-receiving surfaces 42,44.

However, in a case where the spool valve assembly 30 includes a relief valve 114, from the perspective of simplifying configuration of the hydraulic circuit, it is more desirable to switch hydraulic pressure of the first chamber 34 between the pressure of the high pressure oil line 12 and the pressure of the low pressure oil line 14 while maintaining hydraulic pressure of the second chamber 36 at the pressure of the high pressure oil line 12 than to switch hydraulic pressure of the second chamber 36 between the pressure of the low pressure oil line 14 and the pressure of the high pressure oil line 12 while maintaining hydraulic pressure in the first chamber 34 at the pressure of the low pressure oil line 14.

This is because, in view of its function, the relief valve 114 is disposed on the high pressure oil line 12 side with respect to the central position of the first spool valve 40 in the axial direction of the first spool 38 in order to position the hydraulic chamber 24 and the high pressure oil line 12 so that they can communicate with each other. When the relief valve 114 is disposed like this, the switching valve 46 would be positioned on the low pressure oil line 14 side with respect to the central position of the first spool valve 40 in the axial direction of the first spool 38. In accordance, the output port 124 of the switching valve 46 is also positioned on the low pressure oil line 14 side. Thus, it is desirable to have the first chamber 34 (a chamber on the low pressure oil line 14 side) communicate with the output port 124 rather than the second chamber 36 (a chamber on the high pressure oil line 12 side). When the output port 124 is brought into communication with the first chamber 34 (a chamber on the low pressure oil line 14 side), setting the pressure of the high pressure oil line 12 as the standardized pressure for the first chamber 34 and the second chamber 36 makes it possible to use short hydraulic circuit and to simplify the configuration, compared to setting the pressure of the low pressure oil line 14 as the standardized pressure for the first chamber 34 and the second chamber 36.

Further, the switching valve 46 illustrated mainly in reference to FIG. 8 is configured to switch hydraulic pressure of the first chamber 34 between the pressure of the high pressure oil line 12 and the first pressure by switching hydraulic pressure of the third chamber 140 between the pressure of the high pressure oil line 12 and the third pressure, which is lower than the pressure of the high pressure oil line 12 while maintaining hydraulic pressure of the fourth chamber 142 at the pressure of the high pressure oil line 12.

In contrast, the flow path configuration of the switching valve 46 may be modified so that the switching valve 46 is configured to switch hydraulic pressure of the first chamber 34 between the pressure of the high pressure oil line 12 and the first pressure, or to switch hydraulic pressure of the second chamber 36 between the pressure of the low pressure oil line 14 and the second pressure by switching hydraulic pressure of the fourth chamber 142 between the pressure of the low pressure oil line 14 and the fourth pressure, which is higher than the pressure of the low pressure oil line 14 while maintaining hydraulic pressure of the third chamber 140 at the pressure of the low pressure oil line 14.

As a result, it is possible to switch hydraulic pressure of the first chamber 34 or the second chamber 36 of the first spool valve 40 by a simplified configuration in which one of hydraulic pressures which act on the fourth pressure-receiving surface 148 and hydraulic pressure which acts on the third pressure-receiving surface 146 are standardized. Also, it is possible to switch hydraulic pressure of the first chamber 34 or the second chamber 36 of the first spool valve 40 by a simplified configuration in which the pressure of the low pressure oil line 14, which is inherently included in the hydraulic machine, is used as the standardized pressure for the third and fourth pressure-receiving surfaces 146, 148. Accordingly, it is possible to switch a communication state between the first state and the second state by a simplified configuration.

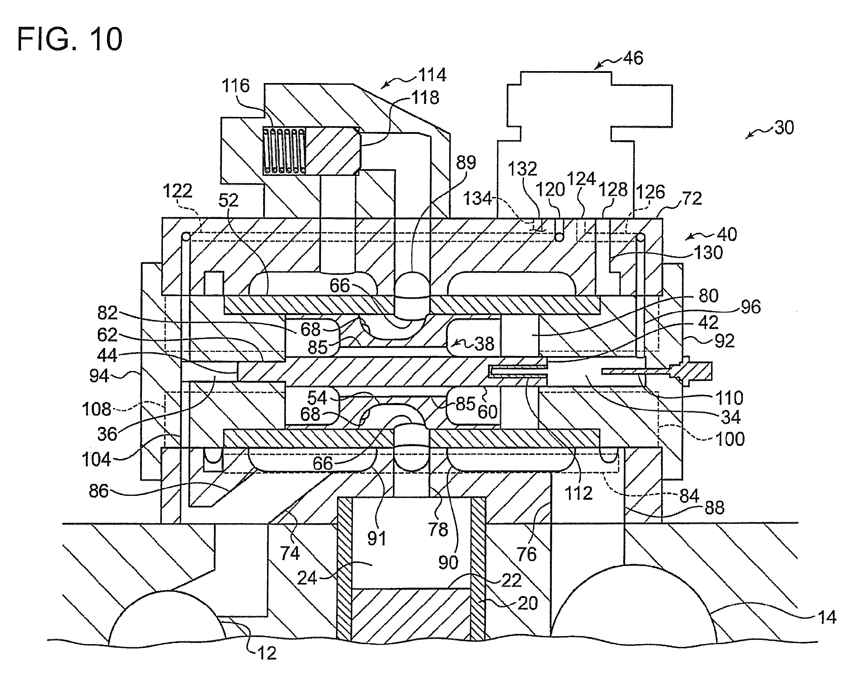

Here, the first drain chamber 80 and the second drain chamber 82 of the first spool valve 40 described in reference to FIG. 4 are configured to communicate with each other through the first drain flow path 84 disposed in the casing 72. In contrast to this, in another embodiment, they may be configured to communicate with each other through the second drain flow path 85 disposed inside the first spool 38 as illustrated in FIG. 10. As a result, it is possible to reduce resistance received from the oil inside the first drain chamber 80 and the second drain chamber 82 upon movement of the first spool 38. Also, as it is possible to reduce weight of the first spool 38, it is possible to improve responsiveness of the first spool valve 40 (i.e., it is possible to improve responsiveness of the spool valve assembly 30). A plurality of second drain flow paths 85 may be provided as illustrated in FIG. 10. Further, the first drain chamber 80 and the second drain chamber 82 may be brought into communication through the second drain flow path alone without the first drain flow path 84 being provided.

Further, the major two of the advantages will be described below as to disposing the sleeve 52 between the first spool 38 and the casing 72 in the first spool valve 40 described in reference to FIG. 4. First, abrasion caused by sliding of the first spool 38 may not affect the casing 72 (it affects only the first spool 38, the sleeve 52, and the first and second end walls 92, 94). Thus, upon replacing the first spool 38 or the like due to abrasion, it may not be necessary to replace the casing 72. Second, cost may be reduced by forming the sleeve 52 which constitutes a sliding portion of the first spool valve as a separate body separate from the casing 72 and providing the sleeve 52 with enhanced hardness and high corrosion resistance as a result of material choice, surface-hardening, etc for the sleeve 52.

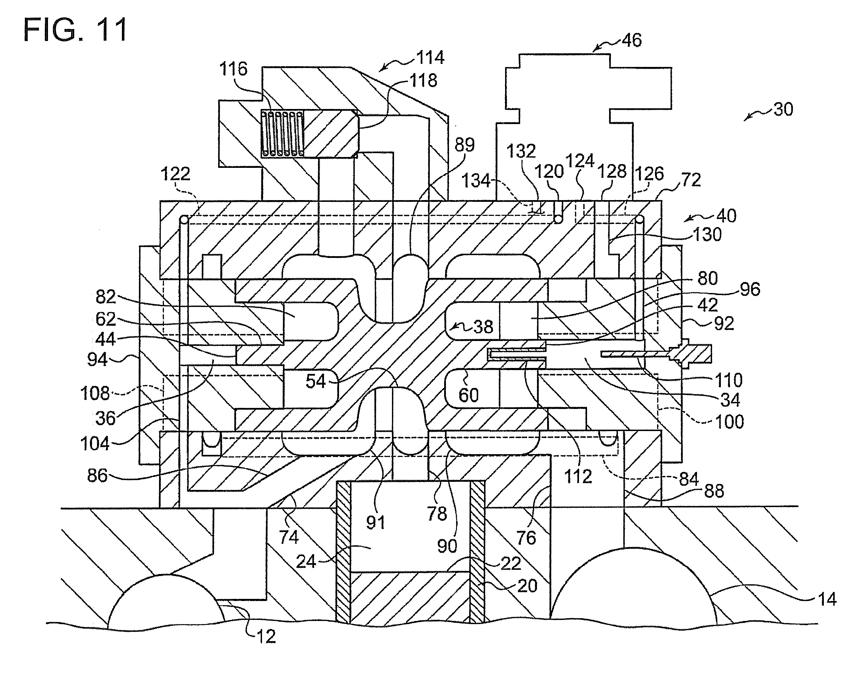

However, in yet another embodiment, the first spool valve 40 may not include the sleeve 52 of FIG. 4, as illustrated in FIG. 11. In this case, the first land portion 56 and the second land portion 58 of the first spool 38 are configured to directly slide with respect to the inner circumferential surface of the casing 72.

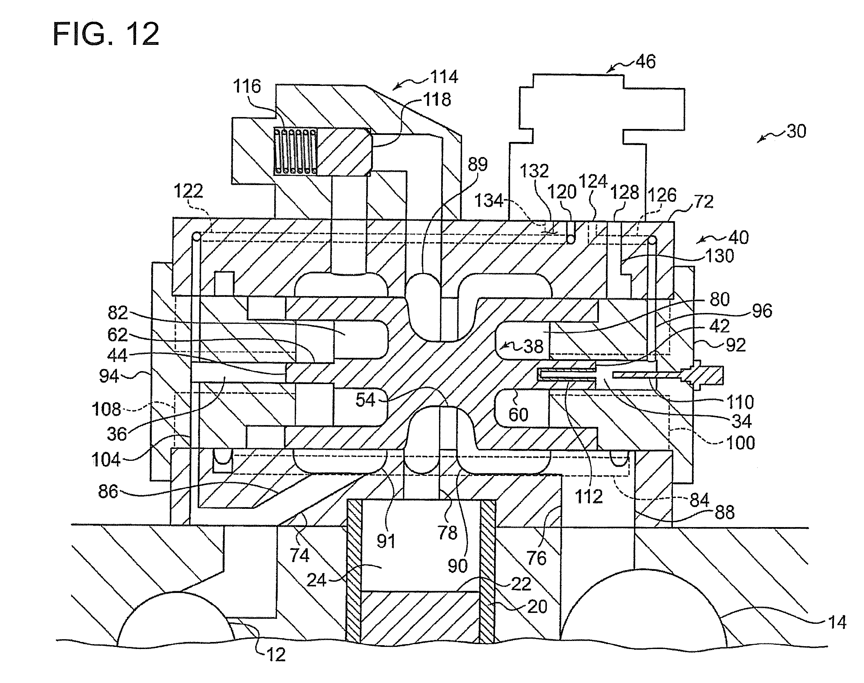

Also in the first spool valve 40 illustrated in FIG. 11, the first state where the high pressure oil line 12 is in communication with the hydraulic chamber 24 (the state illustrated in FIG. 11) is achieved by the high pressure communication path 74 communicating with the hydraulic chamber communication path 78 through the annular groove 54. Also, the second state where the low pressure oil line 14 is in communication with the hydraulic chamber 24 (the state illustrated in FIG. 12) is achieved by the low pressure communication path 76 communicating with the hydraulic chamber communication path 78 through the annular groove 54. The communication state of the hydraulic chamber is switched between the first state and the second state in this case similarly to the case described in reference to FIG. 4 (switching by moving the first spool 38 in its axial direction by utilizing pressures of the first chamber 34 and the second chamber 36).

Here, the casing 72 illustrated in FIG. 11 includes the annular flow path 89. The annular flow path 89 is formed around the annular groove 54 in the same position as that of the hydraulic chamber communication path 78 in the axial direction of the first spool 38. Further, the annular flow path 89 is disposed on a position where it is constantly in communication with the annular groove 54 regardless of the position of the first spool 38. As a result, it is possible to achieve a good communicating state between the relief valve 114 and the hydraulic chamber 24 through the annular groove 54 and the annular flow path 89.

Further, in the first spool valve 40 illustrated in FIG. 11, the sleeve 52 illustrated in FIG. 4 is not interposed between the first spool 38 and the casing 72. By omitting the sleeve 52 including the ports 66, 68, 70 each of which tends to cause pressure loss, it is possible to reduce power loss of the spool valve assembly 30. Also, it is possible to easily secure the flow rate between the high pressure oil line 12 and the hydraulic chamber 24 as well as the flow rate between the low pressure oil line 14 and the hydraulic chamber 24.

Still further, in the first spool valve 40 illustrated in FIG. 4, a sealing member (for instance, an O-ring) which is not illustrated in the drawing is disposed between the sleeve 52, the casing 72, the first end wall 92, and the second end wall 94 to block communication between the flow paths that have different pressures. However, in the first spool valve 40 illustrated in FIG. 11, a seal member corresponding to the sleeve 52 may not be required. Accordingly, for the first spool valve 40 illustrated in FIG. 11, compared to a configuration illustrated in FIG. 4, it is possible to reduce the number of components. Thus, reduction of cost and improvement of assembling property may be expected.

## Claims

1. A spool valve assembly for switching a state of a hydraulic machine which includes a hydraulic chamber (24), a high pressure oil line (12), and a low pressure oil line (14), between a first state where the hydraulic chamber (24) is in communication with the high pressure oil line (12) and a second state where the hydraulic chamber (24) is in communication with the low pressure oil line (14), wherein the spool valve assembly comprises
a first spool valve (40) which comprises:
a first chamber (34);
a second chamber (36); and
a first spool (38) including a first pressure-receiving surface (42) formed so as to receive hydraulic pressure of the first chamber (34) and a second pressure-receiving surface (44) formed so as to receive hydraulic pressure of the second chamber (36), the second pressure-receiving surface (44) having an area smaller than that of the first pressure-receiving surface (42),
wherein the first spool valve (40) is configured to switch a communication state of the hydraulic chamber (24) between the first state and the second state, by switching the hydraulic pressure of the first chamber (34) between the pressure in the high pressure oil line (12) and a first pressure which is lower than the pressure in the high pressure oil line (12) while maintaining the hydraulic pressure in the second chamber (36) at the pressure of the high pressure oil line (12), or by switching the hydraulic pressure of the second chamber (36) between the pressure in the low pressure oil line (14) and a second pressure which is higher than the pressure in the low pressure oil line (14) while maintaining the hydraulic pressure in the first chamber (34) at the pressure of the low pressure oil line (14),
wherein the first spool valve (40) comprises a casing (72) which accommodates the first spool (38),
wherein the first spool (38) comprises a land portion (56, 58) and a groove portion (54) which is disposed adjacent to the land portion (56, 58), the first spool (38) being configured to
be movable in an axial direction of the first spool (38),
wherein the casing (72) comprises a high pressure communication path (74) configured to communicate with the high pressure oil line (12), a low pressure communication path (76) configured to communicate with the low pressure oil line (14), and a hydraulic chamber communication path (78) configured to communicate with the hydraulic chamber (24),
wherein the first state is a state where the high pressure communication path (74) is in communication with the hydraulic chamber communication path (78) via the groove portion (54),
and
wherein the second state is a state where the low pressure communication path (76) is in communication with the hydraulic chamber communication path (78) via the groove portion (54),
and
wherein the first spool valve (40) includes a first drain chamber (80) formed at one end side of the first spool (38) and a second drain chamber (82) formed at other end side of the first spool (38) in the axial direction of the first spool (38),
wherein the first drain chamber (80) and the second drain chamber (82) are configured to communicate with each other via a first drain flow path (84) disposed in the casing and/or a second drain flow path (85) disposed in the first spool (38),
wherein the first spool valve (40) includes an end wall on one end side of the casing (72) in the axial direction of the first spool (38), **characterized in that** the first drain chamber (80) is formed between the end wall and the first spool (38), and
wherein the end wall includes a cut-out (100) through which the first drain chamber (80) is configured to communicate with the first drain flow path (84).

2. The spool valve assembly according to claim 1,
wherein the first pressure is the pressure of the low pressure oil line (14), and
wherein the second pressure is the pressure of the high pressure oil line (12).

3. The spool valve assembly according to claim 1 or 2, further comprising
a second spool valve (48) configured to switch the hydraulic pressure in the first chamber (34) between the first pressure and the pressure of the high pressure oil line (12), or to switch the hydraulic pressure in the second chamber (36) between the second pressure and the pressure of the low pressure oil line (14), and
a solenoid valve (50) configured to operate the second spool valve (48).

4. The spool valve assembly according to claim 3,
wherein the second spool valve (48) comprises a third chamber (140), a fourth chamber (142), and a second spool (144) which includes a third pressure-receiving surface (146) formed so as to receive hydraulic pressure of the third chamber (140) and a fourth pressure-receiving surface (148) formed so as to receive hydraulic pressure of the fourth chamber (142), the fourth pressure-receiving surface (148) having an area smaller than that of the third pressure-receiving surface (146), and
wherein the second spool valve (48) is configured to switch the hydraulic pressure of the first chamber (34) between the first pressure and the pressure of the high pressure oil line (12) or to switch the hydraulic pressure of the second chamber (36) between the second pressure and the pressure of the low pressure oil line (14), by switching the hydraulic pressure of the third chamber (140) between the pressure of the high pressure oil line (12) and a third pressure which is lower than the pressure of the high pressure oil line (12) while maintaining the hydraulic pressure in the fourth chamber (142) at the pressure of the high pressure oil line (12).

5. The spool valve assembly according to claim 3,
wherein the second spool valve (48) comprises a third chamber (140), a fourth chamber (142), and a second spool (144) which includes a third pressure-receiving surface (146) formed so as to receive hydraulic pressure of the third chamber (140) and a fourth pressure-receiving surface (148) formed so as to receive hydraulic pressure of the fourth chamber (142), the fourth pressure-receiving surface (148) having an area smaller than that of the third pressure-receiving surface (146), and
wherein the second spool valve (48) is configured to switch the hydraulic pressure of the first chamber (34) between the first pressure and the pressure of the high pressure oil line (12) or to switch the hydraulic pressure of the second chamber (36) between the second pressure and the pressure of the low pressure oil line (14), by switching the hydraulic pressure of the fourth chamber (142) between the pressure of the low pressure oil line (14) and a fourth pressure which is higher than the pressure of the low pressure oil line (14) while maintaining the hydraulic pressure in the third chamber (140) at the pressure of the low pressure oil line (14).

6. The spool valve assembly according to any one of claims 1 to 5,
wherein the first spool valve is (40) configured to switch a communication state of the hydraulic chamber (24) between the first state and the second state by switching the hydraulic pressure of the first chamber (34) between the first pressure and the pressure of the high pressure oil line (12) while maintaining the hydraulic pressure in the second chamber (36) at the pressure of the high pressure oil line (12).

7. The spool valve assembly according to claim 1,
wherein the first spool valve (40) comprises a sleeve (52) accommodated in the casing (72),
wherein the first spool (38) is configured such that the land portion (56, 58) is slidable on an inner circumferential face of the sleeve (52),
wherein the sleeve (52) includes a high pressure port (68) configured to communicate with the high pressure oil line (12), a low pressure port (70) configured to communicate with the low pressure oil line (14), and a hydraulic chamber port (66) configured to communicate with the hydraulic chamber (24),
wherein the first state is a state where the high pressure communication path (74) is in communication with the land portion (56, 58) via the high pressure port (68) and the hydraulic chamber communication path (78) is in communication with the land portion (56, 58) via the hydraulic chamber port (66), and
wherein the second state is a state where the low pressure communication path (76) is in communication with the land portion (56, 58) via the low pressure port (70) and the hydraulic chamber communication path (78) is in communication with the land portion (56, 58) via the hydraulic chamber port (66).

8. The spool valve assembly according to any one of claims 1 to 7,
wherein the first spool valve (38) includes an end wall on one end side of the casing (72) in the axial direction of the first spool (38), and the first chamber (34) or the second chamber (36) is disposed on the end wall.

9. The spool valve assembly according to any one of claims 1 to 8, further comprising
a sensor (110) which is disposed in the first chamber (34) and configured to detect displacement of the first spool (38) in the axial direction of the first spool (38).

10. The spool valve assembly according to any one of claims 1 to 9, further comprising
a relief valve (114) configured to open when the pressure in the hydraulic chamber (24) exceeds a setting pressure which is not lower than the pressure of the high pressure oil line (12).

11. A hydraulic machine comprising:
a hydraulic chamber (24);
a high pressure oil line (12);
a low pressure oil line (14); and
a spool valve assembly configured to switch a communication state of the hydraulic chamber (24) between a first state where the hydraulic chamber (24) is in communication with the high pressure oil line (12) and a second state where the hydraulic chamber is in communication with the low pressure oil line (14),
wherein the spool valve assembly is one according to any one of claims 1 to 10.

12. A power generating apparatus for generating electric power from renewable energy, comprising:
a main shaft (6) configured to rotate by using the renewable energy;
a hydraulic machine (8) configured to be driven by rotation of the main shaft (6); and
a generator (10) configured to be driven by the hydraulic machine (8),
wherein the hydraulic machine (8) is one according to claim 11.

## Patentansprüche

1. Schieberventilbaugruppe zum Umschalten eines Zustands einer Hydraulikmaschine, die eine Hydraulikkammer (24), eine Hochdruckölleitung (12) und eine Niederdruckölleitung (14) enthält, zwischen einem ersten Zustand, in dem die Hydraulikkammer (24) mit der Hochdruckölleitung (12) in Verbindung steht, und einem zweiten Zustand, in dem die Hydraulikkammer (24) mit der Niederdruckölleitung (14) in Verbindung steht, wobei die Schieberventilbaugruppe
ein erstes Schieberventil (40) umfasst, das umfasst:
eine erste Kammer (34),
eine zweite Kammer (36), und
eine erste Spule (38), die eine erste Druckaufnahmefläche (42), die zum Aufnehmen von Hydraulikdruck der ersten Kammer (34) ausgebildet ist, und eine zweite Druckaufnahmefläche (44) enthält, die zum Aufnehmen von Hydraulikdruck der zweiten Kammer (36) ausgebildet ist, wobei die zweite Druckaufnahmefläche (44) eine Fläche aufweist, die kleiner als jene der ersten Druckaufnahmefläche (42) ist,
wobei das erste Schieberventil (40) zum Umschalten eines Verbindungszustands der Hydraulikkammer (24) zwischen dem ersten Zustand und dem zweiten Zustand konfiguriert ist, durch Umschalten des Hydraulikdrucks der ersten Kammer (34) zwischen dem Druck in der Hochdruckölleitung (12) und einem ersten Druck, der niedriger als der Druck in der Hochdruckölleitung (12) ist, während der Hydraulikdruck in der zweiten Kammer (36) auf dem Druck der Hochdruckölleitung (12) beibehalten wird, oder durch Umschalten des Hydraulikdrucks in der zweiten Kammer (36) zwischen dem Druck in der Niederdruckölleitung (14) und einem zweiten Druck, der höher als der Druck in der Niederdruckölleitung (14) ist, während der Hydraulikdruck in der ersten Kammer (34) auf dem Druck der Niederdruckölleitung (14) beibehalten wird,
wobei das erste Schieberventil (40) ein Gehäuse (72) umfasst, das die erste Spule (38) aufnimmt,
wobei die erste Spule (38) einen Anschlussflächenabschnitt (56, 58) und einen Nutabschnitt (54) umfasst, der dem Anschlussflächenabschnitt (56, 58) benachbart angeordnet ist,
wobei die erste Spule (38) dazu konfiguriert ist, in einer axialen Richtung der ersten Spule (38) beweglich zu sein,
wobei das Gehäuse (72) einen Hochdruckverbindungsweg (74), der zum Verbinden mit der Hochdruckölleitung (12) konfiguriert ist, einen Niederdruckverbindungsweg (76), der zum Verbinden mit der Niederdruckölleitung (14) konfiguriert ist, und einen Hydraulikkammerverbindungsweg (78) umfasst, der zum Verbinden mit der Hydraulikkammer (24) konfiguriert ist,
wobei der erste Zustand ein Zustand ist, in dem der Hochdruckverbindungsweg (74) über den Nutabschnitt (54) mit dem Hydraulikkammerverbindungsweg (78) in Verbindung steht, und
wobei der zweite Zustand ein Zustand ist, in dem der
Niederdruckverbindungsweg (76) über den Nutabschnitt (54) mit dem Hydraulikkammerverbindungsweg (78) in Verbindung steht, und
wobei das erste Schieberventil (40) eine erste Ablasskammer (80), die auf einer Seite der ersten Spule (38) ausgebildet ist, und eine zweite Ablasskammer (82) enthält, die auf einer anderen Seite der ersten Spule (38) in der axialen Richtung der ersten Spule (38) ausgebildet ist,
wobei die erste Ablasskammer (80) und die zweite Ablasskammer (82) zur Verbindung miteinander über einen ersten Ablassstromweg (84), der im Gehäuse angeordnet ist, und/oder einen zweiten Ablassstromweg (85), der in der ersten Spule (38) angeordnet ist, konfiguriert sind,
wobei das erste Schieberventil (40) eine Endwand auf einer Seite des Gehäuses (72) in der axialen Richtung der ersten Spule (38) enthält, **dadurch gekennzeichnet, dass** die erste Ablasskammer (80) zwischen der Endwand und der ersten Spule (38) ausgebildet ist, und
wobei die Endwand einen Ausschnitt (100) enthält, durch den die erste Ablasskammer (80) zur Verbindung mit dem ersten Ablassstromweg (84) konfiguriert ist.

2. Schieberventilbaugruppe nach Anspruch 1,
wobei der erste Druck der Druck der Niederdruckölleitung (14) ist, und
wobei der zweite Druck der Druck der Hochdruckölleitung (12) ist.

3. Schieberventilbaugruppe nach einem der Ansprüche 1 oder 2, ferner umfassend
ein zweites Schieberventil (48), das zum Umschalten des Hydraulikdrucks in der ersten Kammer (34) zwischen dem ersten Druck und dem Druck der Hochdruckölleitung (12) oder zum Umschalten des Hydraulikdrucks in der zweiten Kammer (36) zwischen dem zweiten Druck und dem Druck der Niederdruckölleitung (14) konfiguriert ist, und
ein Magnetventil (50), das zum Betreiben des zweiten Schieberventils (48) konfiguriert ist.

4. Schieberventilbaugruppe nach Anspruch 3,
wobei das zweite Schieberventil (48) eine dritte Kammer (140), eine vierte Kammer (142) und eine zweite Spule (144) umfasst, die eine dritte Druckaufnahmefläche (146), die zum Aufnehmen von Hydraulikdruck der dritten Kammer (140) ausgebildet ist, und eine vierte Druckaufnahmefläche (148) enthält, die zum Aufnehmen von Hydraulikdruck der vierten Kammer (142) ausgebildet ist, wobei die vierte Druckaufnahmefläche (148) eine Fläche aufweist, die kleiner als jene der dritten Druckaufnahmefläche (146) ist, und
wobei das zweite Schieberventil (48) zum Umschalten des Hydraulikdrucks der ersten Kammer (34) zwischen dem ersten Druck und dem Druck der Hochdruckölleitung (12) oder zum Umschalten des Hydraulikdrucks der zweiten Kammer (36) zwischen dem zweiten Druck und dem Druck der Niederdruckölleitung (14) konfiguriert ist, durch Umschalten des Hydraulikdrucks der dritten Kammer (140) zwischen dem Druck der Hochdruckölleitung (12) und einem dritten Druck, der niedriger als der Druck der Hochdruckölleitung (12) ist, während der Hydraulikdruck der vierten Kammer (142) auf dem Druck der Hochdruckölleitung (12) beibehalten wird.

5. Schieberventilbaugruppe nach Anspruch 3,
wobei das zweite Schieberventil (48) eine dritte Kammer (140), eine vierte Kammer (142) und eine zweite Spule (144) umfasst, die eine dritte Druckaufnahmefläche (146), die zum Aufnehmen von Hydraulikdruck der dritten Kammer (140) ausgebildet ist, und eine vierte Druckaufnahmefläche (148) enthält, die zum Aufnehmen von Hydraulikdruck der vierten Kammer (142) ausgebildet ist, wobei die vierte Druckaufnahmefläche (148) eine Fläche aufweist, die kleiner als jene der dritten Druckaufnahmefläche (146) ist, und
wobei das zweite Schieberventil (48) zum Umschalten des Hydraulikdrucks der ersten Kammer (34) zwischen dem ersten Druck und dem Druck der Hochdruckölleitung (12) oder zum Umschalten des Hydraulikdrucks der zweiten Kammer (36) zwischen dem zweiten Druck und dem Druck der Niederdruckölleitung (14) konfiguriert ist, durch Umschalten des Hydraulikdrucks der vierten Kammer (142) zwischen dem Druck der Niederdruckölleitung (14) und einem vierten Druck, der höher als der Druck der Niederdruckölleitung (14) ist, während der Hydraulikdruck der dritten Kammer (140) auf dem Druck der Niederdruckölleitung (14) beibehalten wird.

6. Schieberventilbaugruppe nach einem der Ansprüche 1 bis 5,
wobei das erste Schieberventil (40) zum Umschalten eines Verbindungszustands der Hydraulikkammer (24) zwischen dem ersten und dem zweiten Zustand durch Umschalten des Hydraulikdrucks der ersten Kammer (34) zwischen dem ersten Druck und dem Druck der Hochdruckölleitung (12) konfiguriert ist, während der Hydraulikdruck in der zweiten Kammer (36) auf dem Druck der Hochdruckölleitung (12) beibehalten wird.

7. Schieberventilbaugruppe nach Anspruch 1,
wobei das erste Schieberventil (40) eine Hülse (52) umfasst, die im Gehäuse (72) aufgenommen ist,
wobei die erste Spule (38) derart konfiguriert ist, dass der Anschlussflächenabschnitt (56, 58) auf einer Innenumfangsfläche der Hülse (52) verschiebbar ist,
wobei die Hülse (52) eine Hochdruckdurchlassöffnung (68), die zum Verbinden mit der Hochdruckölleitung (12) konfiguriert ist, eine Niederdruckdurchlassöffnung (70), die zum Verbinden mit der Niederdruckölleitung (14) konfiguriert ist, und eine Hydraulikkammerdurchlassöffnung (66) enthält, die zum Verbinden mit der Hydraulikkammer (24) konfiguriert ist,
wobei der erste Zustand ein Zustand ist, in dem der Hochdruckverbindungsweg (74) über die Hochdruckdurchlassöffnung (68) mit dem Anschlussflächenabschnitt (56, 58) in Verbindung steht und der Hydraulikkammerverbindungsweg (78) über die Hydraulikkammerdurchlassöffnung (66) mit dem Anschlussflächenabschnitt (56, 58) in Verbindung steht, und
wobei der zweite Zustand ein Zustand ist, in dem der Niederdruckverbindungsweg (76) über die Niederdruckdurchlassöffnung (70) mit dem Anschlussflächenabschnitt (56, 58) in Verbindung steht und der Hydraulikkammerverbindungsweg (78) über die Hydraulikkammerdurchlassöffnung (66) mit dem Anschlussflächenabschnitt (56, 58) in Verbindung steht.

8. Schieberventilbaugruppe nach einem der Ansprüche 1 bis 7,
wobei das erste Schieberventil (38) eine Endwand auf einer Endseite des Gehäuses (72) in der axialen Richtung der ersten Spule (38) enthält, und wobei die erste Kammer (34) oder die zweite Kammer (36) an der Endwand angeordnet ist.

9. Schieberventilbaugruppe nach einem der Ansprüche 1 bis 8, ferner umfassend
einen Sensor (110), der in der ersten Kammer (34) angeordnet ist und zum Erkennen der Verschiebung der ersten Spule (38) in der axialen Richtung der ersten Spule (38) konfiguriert ist.

10. Schieberventilbaugruppe nach einem der Ansprüche 1 bis 9, ferner umfassend
ein Entlastungsventil (114), das zum Öffnen konfiguriert ist, wenn der Druck in der Hydraulikkammer (24) einen Einstelldruck übersteigt, der nicht niedriger als der Druck in der Hochdruckölleitung (12) ist.

11. Hydraulikmaschine, umfassend:
eine Hydraulikkammer (24),
eine Hochdruckölleitung (12),
eine Niederdruckölleitung (14), und
eine Schieberventilbaugruppe, die zum Umschalten eines Verbindungszustands der Hydraulikkammer (24) zwischen einem ersten Zustand, in dem die Hydraulikkammer (24) mit der Hochdruckölleitung (12) in Verbindung steht, und einem zweiten Zustand, in dem die Hydraulikkammer mit der Niederdruckölleitung (14) in Verbindung steht, konfiguriert ist,
wobei die Schieberventilbaugruppe eine gemäß einem der Ansprüche 1 bis 10 ist.

12. Stromerzeugungsvorrichtung zum Erzeugen von elektrischem Strom aus erneuerbarer Energie, umfassend:
eine Hauptwelle (6), die zum Drehen durch Benutzen der erneuerbaren Energie konfiguriert ist,
eine Hydraulikmaschine (8), die dazu konfiguriert ist, durch Drehung der Hauptwelle (6) betrieben zu werden, und
einen Generator (10), der dazu konfiguriert ist, durch die Hydraulikmaschine (8) betrieben zu werden,
wobei die Hydraulikmaschine (8) eine gemäß Anspruch 11 ist.

## Revendications

1. Ensemble de distributeur à tiroir pour commuter un état d'une machine hydraulique qui comprend une chambre hydraulique (24), une conduite d'huile haute pression (12) et une conduite d'huile basse pression (14), entre un premier état dans lequel la chambre hydraulique (24) est en communication avec la conduite d'huile haute pression (12) et un second état dans lequel la chambre hydraulique (24) est en communication avec la conduite d'huile basse pression (14), dans lequel l'ensemble de distributeur à tiroir comprend
un premier distributeur à tiroir (40) qui comprend :
une première chambre (34) ;
une deuxième chambre (36) ; et
un premier tiroir (38) comprenant une première surface de réception de pression (42) formée afin de recevoir la pression hydraulique de la première chambre (34) et une deuxième surface de réception de pression (44) formée afin de recevoir la pression hydraulique de la deuxième chambre (36), la deuxième surface de réception de pression (44) ayant une surface plus petite que celle de la première surface de réception de pression (42),
dans lequel le premier distributeur à tiroir (40) est configuré pour commuter un état de communication de la chambre hydraulique (24) entre le premier état et le second état, en commutant la pression hydraulique de la première chambre (34) entre la pression dans la conduite d'huile haute pression (12) et une première pression qui est inférieure à la pression dans la conduite d'huile haute pression (12) tout en maintenant la pression hydraulique dans la deuxième chambre (36) à la pression de la conduite d'huile haute pression (12), ou en commutant la pression hydraulique de la deuxième chambre (36) entre la pression dans la conduite d'huile basse pression (14) et une deuxième pression qui est supérieure à la pression dans la conduite d'huile basse pression (14) tout en maintenant la pression hydraulique dans la première chambre (34) à la pression de la conduite d'huile basse pression (14),
dans lequel le premier distributeur à tiroir (40) comprend un boîtier (72) qui loge le premier tiroir (38),
dans lequel le premier tiroir (38) comprend une partie d'appui (56, 58) et une partie de rainure (54) qui est disposée de manière adjacente à la partie d'appui (56, 58), le premier tiroir (38) étant configuré pour être mobile dans une direction axiale du premier tiroir (38),
dans lequel le boîtier (72) comprend une trajectoire de communication haute pression (74) configurée pour communiquer avec la conduite d'huile haute pression (12), une trajectoire de communication basse pression (76) configurée pour communiquer avec la conduite d'huile basse pression (14) et une trajectoire de communication de chambre hydraulique (78) configurée pour communiquer avec la chambre hydraulique (24),
dans lequel le premier état est un état dans lequel la trajectoire de communication haute pression (74) est en communication avec la trajectoire de communication de chambre hydraulique (78) via la partie de rainure (54), et
dans lequel le second état est un état dans lequel la trajectoire de communication basse pression (76) est en communication entre la trajectoire de communication de chambre hydraulique (78) via la partie de rainure (54), et
dans lequel le premier distributeur à tiroir (40) comprend une première chambre de drainage (80) formée au niveau d'un côté d'extrémité du premier tiroir (38) et une deuxième chambre de drainage (82) formée au niveau de l'autre côté d'extrémité du premier tiroir (38) dans la direction axiale du premier tiroir (38),
dans lequel la première chambre de drainage (80) et la deuxième chambre de drainage (82) sont configurées pour communiquer entre elles via une première trajectoire d'écoulement de drainage (84) disposée dans le boîtier et/ou une seconde trajectoire d'écoulement de drainage (85) disposée dans le premier tiroir (38),
dans lequel le premier distributeur à tiroir (40) comprend une paroi d'extrémité sur un côté d'extrémité du boîtier (72) dans la direction axiale du premier tiroir (38), **caractérisé en ce que**
la première chambre de drainage (80) est formée entre la paroi d'extrémité et le premier tiroir (38), et
dans lequel la paroi d'extrémité comprend une découpe (100) à travers laquelle la première chambre de drainage (80) est configurée pour communiquer avec la première trajectoire d'écoulement de drainage (84).

2. Ensemble de distributeur à tiroir selon la revendication 1,
dans lequel la première pression est la pression de la conduite d'huile basse pression (14), et
dans lequel la deuxième pression est la pression de la conduite d'huile haute pression (12).

3. Ensemble de distributeur à tiroir selon la revendication 1 ou 2, comprenant en outre
un second distributeur à tiroir (48) configuré pour commuter la pression hydraulique dans la première chambre (34) entre la première pression et la pression de la conduite d'huile haute pression (12) ou pour commuter la pression hydraulique dans la deuxième chambre (36) entre la deuxième pression et la pression de la conduite d'huile basse pression (14), et
une électrovalve (50) configurée pour actionner le second distributeur à tiroir (48).

4. Ensemble de distributeur à tiroir selon la revendication 3,
dans lequel le second distributeur à tiroir (48) comprend une troisième chambre (140), une quatrième chambre (142), et un second tiroir (144) qui comprend une troisième surface de réception de pression (146) formée pour recevoir la pression hydraulique de la troisième chambre (140) et une quatrième surface de réception de pression (148) formée pour recevoir la pression hydraulique de la quatrième chambre (142), la quatrième surface de réception de pression (148) ayant une surface inférieure à celle de la troisième surface de réception de pression (146), et
dans lequel le second distributeur à tiroir (48) est configuré pour commuter la pression hydraulique de la première chambre (34) entre la première pression et la pression de la conduite d'huile haute pression (12) ou pour commuter la pression hydraulique de la deuxième chambre (36) entre la deuxième pression et la pression de la conduite d'huile basse pression (14), en commutant la pression hydraulique de la troisième chambre (140) entre la pression de la conduite d'huile haute pression (12) et une troisième pression qui est inférieure à la pression de la conduite d'huile haute pression (12) tout en maintenant la pression hydraulique dans la quatrième chambre (142) à la pression de la conduite d'huile haute pression (12).

5. Ensemble de distributeur à tiroir selon la revendication 3,
dans lequel le second distributeur à tiroir (48) comprend une troisième chambre (140), une quatrième chambre (142) et un second tiroir (144) qui comprend une troisième surface de réception de pression (146) formée afin de recevoir la pression hydraulique de la troisième chambre (140) et une quatrième surface de réception de pression (148) formée pour recevoir la pression hydraulique de la quatrième chambre (142), la quatrième surface de réception de pression (148) ayant une surface inférieure à celle de la troisième surface de réception de pression (146), et
dans lequel le second distributeur à tiroir (48) est configuré pour commuter la pression hydraulique de la première chambre (34) entre la première pression et la pression de la conduite d'huile haute pression (12) ou pour commuter la pression hydraulique de la deuxième chambre (36) entre la deuxième pression et la pression de la conduite d'huile basse pression (14), en commutant la pression hydraulique de la quatrième chambre (142) entre la pression de la conduite d'huile basse pression (14) et une quatrième pression qui est supérieure à la pression de la conduite d'huile basse pression (14) tout en maintenant la pression hydraulique dans la troisième chambre (140) à la pression de la conduite d'huile basse pression (14).

6. Ensemble de distributeur à tiroir selon l'une quelconque des revendications 1 à 5,
dans lequel le premier distributeur à tiroir (40) est configuré pour commuter un état de communication de la chambre hydraulique (24) entre le premier état et le second état en commutant la pression hydraulique de la première chambre (34) entre la première pression et la pression de la conduite d'huile haute pression (12) tout en maintenant la pression hydraulique dans la deuxième chambre (36) à la pression de la conduite d'huile haute pression (12).

7. Ensemble de distributeur à tiroir selon la revendication 1,
dans lequel le premier distributeur à tiroir (40) comprend un manchon (52) logé dans le boîtier (72),
dans lequel le premier tiroir (38) est configuré de sorte que la partie d'appui (56, 58) peut coulisser sur une face circonférentielle du manchon (52),
dans lequel le manchon (52) comprend un orifice de haute pression (68) configuré pour communiquer avec la conduite d'huile haute pression (12), un orifice de basse pression (70) configuré pour communiquer avec la conduite d'huile basse pression (14), et un orifice de chambre hydraulique (66) configuré pour communiquer avec la chambre hydraulique (24),
dans lequel le premier état est un état dans lequel la trajectoire de communication haute pression (74) est en communication avec la partie d'appui (56, 58) via l'orifice de haute pression (68) et la trajectoire de communication de chambre hydraulique (78) est en communication avec la partie d'appui (56, 58) via l'orifice de chambre hydraulique (66), et
dans lequel le second état est un état dans lequel la trajectoire de communication basse pression (76) est en communication avec la partie d'appui (56, 58) via l'orifice de basse pression (70) et la trajectoire de communication de chambre hydraulique (78) est en communication avec la partie d'appui (56, 58) via l'orifice de chambre hydraulique (66).

8. Ensemble de distributeur à tiroir selon l'une quelconque des revendications 1 à 7,
dans lequel le premier distributeur à tiroir (38) comprend une paroi d'extrémité sur un côté d'extrémité du boîtier (72) dans la direction axiale du premier tiroir (38) et la première chambre (34) ou la seconde chambre (36) est disposée sur la paroi d'extrémité.

9. Ensemble de distributeur à tiroir selon l'une quelconque des revendications 1 à 8, comprenant en outre
un capteur (110) qui est disposé dans la première chambre (34) et configuré pour détecter le déplacement du premier tiroir (38) dans la direction axiale du premier tiroir (38).

10. Ensemble de distributeur à tiroir selon l'une quelconque des revendications 1 à 9, comprenant en outre
une soupape de décharge de pression (114) configurée pour s'ouvrir lorsque la pression dans la chambre hydraulique (24) dépasse une pression de consigne qui n'est pas inférieure à la pression de la conduite d'huile haute pression (12).

11. Machine hydraulique comprenant :
une chambre hydraulique (24) ;
une conduite d'huile haute pression (12) ;
une conduite d'huile basse pression (14) ; et
un ensemble de distributeur à tiroir configuré pour commuter un état de communication de la chambre hydraulique (24) entre un premier état dans lequel la chambre hydraulique (24) est en communication avec la conduite d'huile haute pression (12) et un second état dans lequel la chambre hydraulique est en communication avec la conduite d'huile basse pression (14),
dans laquelle l'ensemble de distributeur à tiroir est un ensemble selon l'une quelconque des revendications 1 à 10.

12. Appareil de génération de puissance pour générer du courant électrique à partir d'énergie renouvelable, comprenant :
un arbre principal (6) configuré pour tourner en utilisant l'énergie renouvelable ;
une machine hydraulique (8) configurée pour être entraînée par la rotation de l'arbre principal (6) ; et
un générateur (10) configuré pour être entraîné par la machine hydraulique (8),
dans lequel la machine hydraulique (8) est une machine selon la revendication 11.
